# EUROPEAN PATENT APPLICATION

(11) **EP 2 131 231 A1**
(43) Date of publication of application: **09.12.2009**
(21) Application number: 08710685.2
(22) Date of filing: 31.01.2008
(51) Int. Cl.: G02F 1/1333, G02F 1/1337, G02F 1/1368

(54) **LIQUID CRYSTAL PANEL AND LIQUID CRYSTAL DISPLAY APPARATUS**

(30) Priority: 03.04.2007 JP 2007097863; 02.11.2007 JP 2007286747
(71) Applicant: Sharp Kabushiki Kaisha, Osaka-shi, Osaka 545-8522 (JP)
(72) Inventor: OKAZAKI, Tsuyoshi, Osaka-shi, Osaka 545-8522 (JP); MATSUMOTO, Toshihiro, Osaka-shi, Osaka 545-8522 (JP); SHIMIZU, Masahiro, Osaka-shi, Osaka 545-8522 (JP); KATAYAMA, Takashi, Osaka-shi, Osaka 545-8522 (JP)
(74) Representative: Müller - Hoffmann & Partner
(86) International application number: PCT/JP2008/051587
(87) International publication number: WO 2008/120492

(57) **Abstract**

Disclosed is an OCB mode liquid crystal panel (10a) including: an active matrix substrate which includes signal lines including scanning signal lines (16) and data signal lines (15), transistors (12) connected to the respective signal lines, and pixel electrodes (17) provided for respective pixel areas demarcated by the signal lines; a counter substrate; and a liquid crystal layer provided between the active matrix substrate and the counter substrate, the liquid crystal layer being caused to transition from a bend alignment to a splay alignment; the active matrix substrate having a surface on which a step section (7) for suppressing reverse transition from a bend alignment to a splay alignment is provided, the step section being provided so that (i) the step section, (ii) a corresponding gap between two adjacent pixel electrodes (17) and (iii) a corresponding one of the signal lines (15 and 16) overlap each other. According to the above arrangement, it is possible to suppress spreading of a splay alignment due to reverse transition (bend to splay transition) during display, in an OCB mode liquid crystal panel.

## Description

### Technical Field

The present invention relates to a liquid crystal panel of an OCB (Optically Compensated Birefringence) mode (hereinafter referred to as "OCB mode liquid crystal panel").

### Background Art

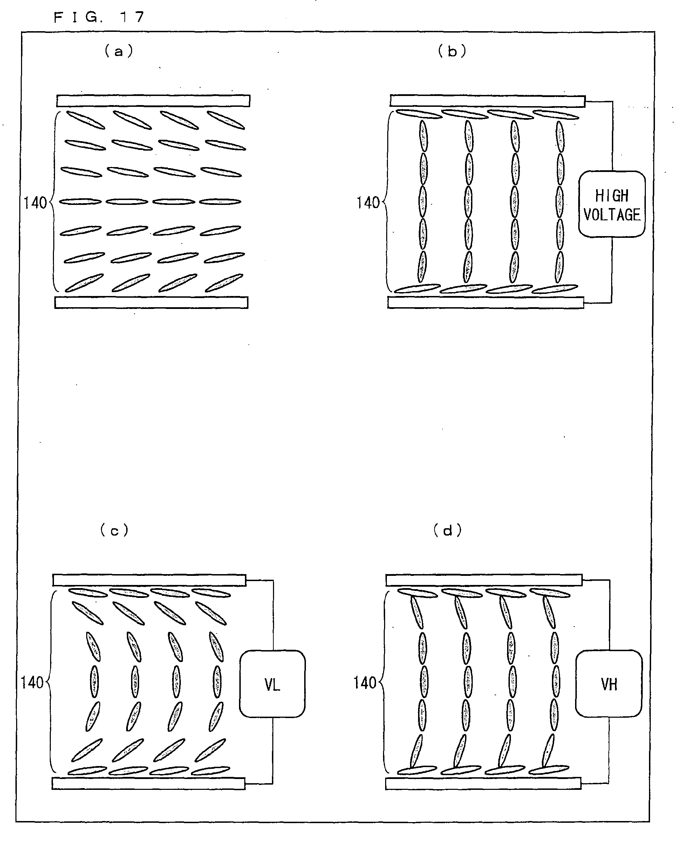

Attention has been given to an OCB mode liquid crystal panel as a liquid crystal panel which has a broad viewing angle and an excellent high-speed response performance. As illustrated in (a) through (d) of Fig. 17, in the OCB mode liquid crystal panel, a liquid crystal layer 140 is in a splay alignment in a state in which a voltage is not applied ((a) of Fig. 17). By application of a high voltage, the liquid crystal layer 140 transitions to a bend alignment (splay to bend transition)((b) of Fig. 17). By use of this bend alignment, display between white display ((c) of Fig. 17) and black display ((d) of Fig. 17) is carried out. In other words, a voltage in a fixed range (a voltage VL to a voltage VH) is continuously applied to the liquid crystal layer 140 so as to maintain a bend alignment of the liquid crystal layer 140; when the voltage VL is applied, white display is displayed, and when the voltage VH is applied, black display is displayed.

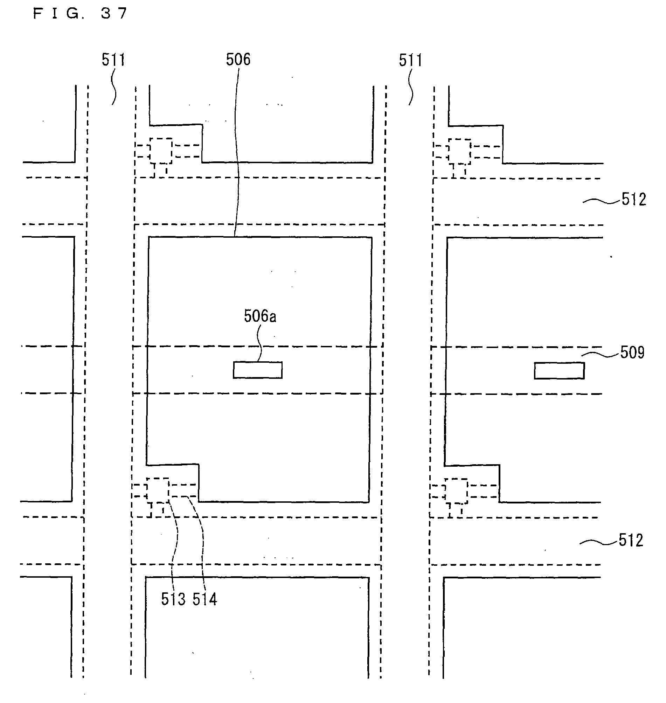

Fig. 37 is an arrangement of an active matrix substrate that is used in an OCB mode liquid crystal panel disclosed in Patent Literature 1. As illustrated in Fig. 37, this conventional active matrix substrate includes pixel electrodes 506 provided in pixel areas, respectively, which pixel areas are demarcated by gate lines 512 and source lines 511. The pixel electrodes 506 are connected to respective drain electrodes 514 of respective TFTs (Thin Film Transistor) 513. Moreover, each of the pixel electrodes 506 has a region which overlaps a respective storage capacitor electrode 509 that passes transversely through the pixel areas. Each of these regions has an opening 506a of a rectangular shape. An alignment film (not illustrated) is formed so as to cover the pixel electrodes 506. A rubbing process is carried out to this alignment film and also to an alignment film provided on a color filter substrate, so as to align liquid crystal molecules in the liquid crystal layer. A rubbing direction of the rubbing process is a direction parallel to the source lines 511.

In the OCB mode liquid crystal panel, a splay - bend transition occurs by having a region above the opening 506a serve as a transition nucleus. This region above the opening 506a locally has strong electric field strength. For example, in a state of the pixel electrodes 506 to which a voltage is not applied (maintaining the source lines 511 to a voltage of 0 V), a voltage of -25 V is applied between a counter electrode (not illustrated) of a color filter substrate and the storage capacitor electrode 509 for one minute. This causes the splay - bend transition to propagate from the transition nucleus to the whole pixel.
Patent Literature 1
   Japanese Patent Application Publication, Tokukai, No. 2003-107506 A (Publication Date: April 9, 2003)

### Summary of Invention

The inventors of the present invention found that the conventional OCB mode liquid crystal panel has the following problems.

A first problem is as follows. In a display state in which a splay - bend transition has been carried out, the liquid crystal molecules above the gate lines 512 and the source lines 511 receive transverse electric field from the signal lines; this causes a reverse transition (bend to splay transition). The liquid crystal molecules which have reversely transitioned serve as a nucleus, and cause a splay alignment to spread in a pixel, for example during white display (when low voltage is applied). The pixel in which the splay alignment has spread due to the reverse transition becomes a bright dot, and is observed as a point defect.

A second problem is as follows. In a liquid crystal panel, a spacer is provided between an active matrix substrate and a color filter substrate. Caused by the spacer, liquid crystal molecules in a splay alignment remain at a shadow part of the spacer, even after the splay - bend transition has spread throughout the pixel. The liquid crystal molecules in the splay alignment which remain at this shadow part serve as a nucleus, and causes the splay alignment to spread in the pixel, for example during white display.

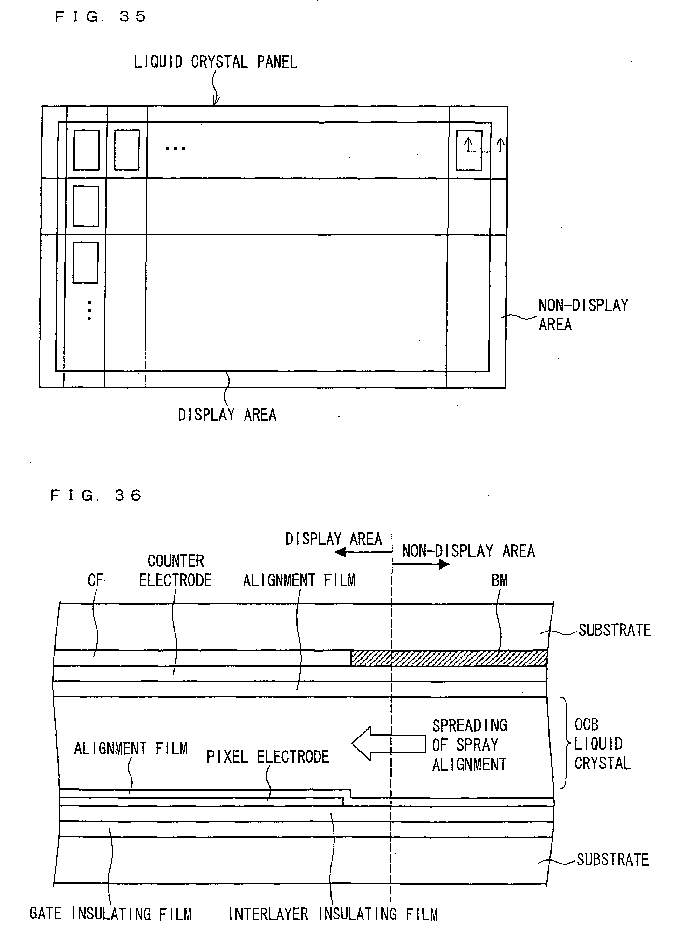

A third problem is as follows. In a liquid crystal panel, a non-display area is formed so as to surround a display area, as illustrated in Fig. 35; a voltage is not applied to the liquid crystal layer in the non-display area, therefore the liquid crystal layer in the non-display area is always in a splay alignment. This splay alignment of the non-display area spreads in the pixel in the display area during white display for example (see Fig. 36).

The present invention is accomplished in view of these problems, and its object is to provide an OCB mode liquid crystal panel which is capable of suppressing spreading of a splay alignment caused by reverse transition during display.

A liquid crystal panel in accordance with the present invention includes: an active matrix substrate on which (i) signal lines including scanning signal lines and data signal lines, (ii) transistors connected to the respective signal lines, and (iii) pixel electrodes provided for respective pixel areas demarcated by the signal lines are provided; a counter substrate; and a liquid crystal layer provided between the active matrix substrate and the counter substrate, the liquid crystal layer being caused to transition from a splay alignment to a bend alignment, at least one of the active matrix substrate and the counter substrate having a surface on which a step section for suppressing reverse transition from a bend alignment to a splay alignment is provided, the step section being provided so that (i) the step section, (ii) a corresponding gap between adjacent pixel electrodes and (iii) a corresponding one of the signal lines overlap each other.

According to the arrangement, even if reverse transition from a bend alignment to a splay alignment occurs during display in liquid crystal molecules above the signal lines, which reverse transition is caused by transverse electric field between (i) data signal lines or scanning signal lines and (ii) a periphery of the pixel electrodes, a step section provided on the surface suppresses spreading of the reverse transition. This is because it is difficult for the reverse transition to propagate at the step section. As a result, it is possible to suppress the spreading of a splay alignment in a pixel during while display or the like, which therefore improves display quality.

In the present liquid crystal panel, the step section may be provided by providing a corresponding groove, which groove is provided on the surface such that (i) the corresponding groove, (ii) the corresponding gap between adjacent pixel electrodes and (iii) the corresponding one of the signal lines overlap each other.

In the present liquid crystal panel, the step section may be provided by providing a corresponding plurality of depressions, which depressions are provided on the surface such that (i) the corresponding depressions, (ii) the corresponding gap between adjacent pixel electrodes and (iii) the corresponding one of the signal lines overlap each other.

The present liquid crystal panel may be arranged such that a corresponding pair of embankments that face each other is provided on the surface such that (i) the corresponding pair of embankments, (ii) the corresponding gap between adjacent pixel electrodes and (iii) the corresponding one of the signal lines overlap each other, and the step section is provided by providing the corresponding pair of embankments. Each of the embankments may be constructed by, for example, providing an insulating film to be provided above the transistor to be thicker in embankment parts than adjacent parts to the embankment part.

The present liquid crystal panel may be arranged such that the step section is provided on a surface of the active matrix substrate. A groove and depressions for providing the step section may be easily provided by, for example, partially removing or partially reducing thickness of an insulating film of the active matrix substrate. In this case, the insulating film is preferably an interlayer insulating film provided above the transistors, which interlayer insulating film includes an organic material. This is because an arrangement in which the interlayer insulating film including an organic material and being provided above the transistors is capable of attaining a sufficient level difference by partially removing or partially reducing thickness of this interlayer insulating film.

The present liquid crystal panel may be arranged such that the step section is provided on a surface of the counter substrate. A groove for providing the step section may be easily provided, for example, by partially removing or partially reducing thickness of an insulating film of the counter substrate.

The present liquid crystal panel may be arranged such that each of the active matrix substrate and the counter substrate has a surface on which the step section is provided.

The present liquid crystal panel may be arranged further including retention capacitor wires which pass transversely through the respective pixel areas, the pixel electrodes having openings in parts where the pixel electrodes and the retention capacitor wires overlap each other, the openings causing transition from a splay alignment to a bend alignment.

A liquid crystal panel of the present invention includes: an active matrix substrate on which (i) signal lines including scanning signal lines and data signal lines, (ii) transistors connected to the respective signal lines, and (iii) pixel electrodes provided for respective pixel areas demarcated by the signal lines are provided; a counter substrate; a liquid crystal layer provided between the active matrix substrate and the counter substrate, the liquid crystal layer being caused to transition from a splay alignment to a bend alignment; and a spacer provided between the active matrix substrate and the counter substrate, at least one of the active matrix substrate and the counter substrate having a surface on which a step section is provided for suppressing reverse transition from a bend alignment to a splay alignment, the step section being provided so as to surround the spacer.

According to the arrangement, even if the splay alignment remains around the spacer upon transition from a splay alignment to a bend alignment as a shadow of the spacer, the step section suppresses the splay alignment from spreading (reverse transition). This is because it is difficult for the reverse transition to propagate at the step section. As a result, it is possible to suppress spreading of the splay alignment in a pixel during white display or the like, which therefore improves display quality.

In the present liquid crystal panel, the step section may be provided by a trench-form recess section provided so as to surround the spacer. The recess section may be provided on a surface of the active matrix substrate, and the recess section can be easily provided by partially removing or partially reducing thickness of an insulating film of the active matrix substrate. In this case, the insulating film is preferably an interlayer insulating film provided above the transistors, which interlayer insulating film includes an organic material. This is because, with an arrangement in which a thick interlayer insulating film is provided above the transistors, which interlayer insulating film includes an organic material, it is possible to attain a sufficient level difference by partially removing or partially reducing thickness of this interlayer insulating film.

In the present liquid crystal panel, the recess section may be provided on a surface of the counter substrate. The recess section is easily provided by, for example, partially removing or partially reducing thickness of an insulating film of the counter substrate.

A liquid crystal display apparatus of the present invention includes the foregoing liquid crystal panel.

A liquid crystal panel of the present invention includes: a display area; a non-display area which adjoins the display area; and a liquid crystal layer provided between the active matrix substrate and the counter substrate, the liquid crystal layer being caused to transition from a splay alignment to a bend alignment, at least one of the active matrix substrate and the counter substrate having a surface on which a step section for suppressing reverse transition from a bend alignment to a splay alignment are provided, the step section being provided so as to surround a display area part. Note that a non-display area of the liquid crystal panel denotes a part at end sections of the panel outside the display area part; a voltage is not applied to the liquid crystal layer in the non-display area at all times.

In the non-display area, the alignment is always in a splay alignment since a voltage is not applied to the liquid crystal layer in the non-display area. According to the arrangement, it is possible to suppress spreading (particularly during white display) of a splay alignment from the non-display area to the display area by providing the step section. This is because it is difficult for the reverse transition to propagate at the step section. As a result, it is possible to attain a liquid crystal panel of a high display quality.

In the liquid crystal panel, the step section may be provided on the surface by providing a recess section, which recess section is provided so as to surround a display area part. The recess section may be provided, for example, by partially removing or partially reducing thickness of an insulating film of the active matrix substrate. Moreover, the recess section may be provided by partially removing or partially reducing thickness of an insulating film of the counter substrate.

As described above, in a liquid crystal panel in accordance with the present invention, at least one of an active matrix substrate and a counter substrate has a surface on which a step section is provided for suppressing reverse transition from a bend alignment to a splay alignment, which step section is provided such that (i) the step section, (ii) a corresponding gap between adjacent pixel electrodes and (iii) a corresponding one of the signal lines overlap each other. Hence, even if reverse transition from a bend alignment to a splay alignment occurs during display in liquid crystal molecules above the signal lines, the spreading of the reverse transition is suppressed by the step section. As a result, it is possible to suppress spreading of the splay alignment in a pixel during white display, which therefore improves display quality.

### Brief Description of Drawings

Fig. 1

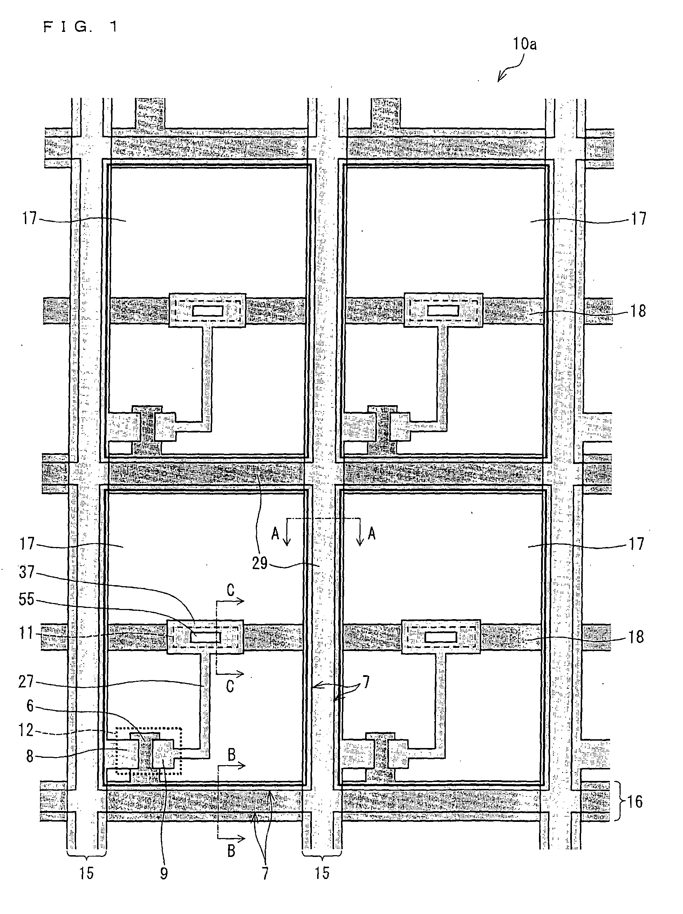

   Fig. 1 is a plan view illustrating an arrangement of a liquid crystal panel in accordance with a first embodiment of the present invention.
Fig. 2

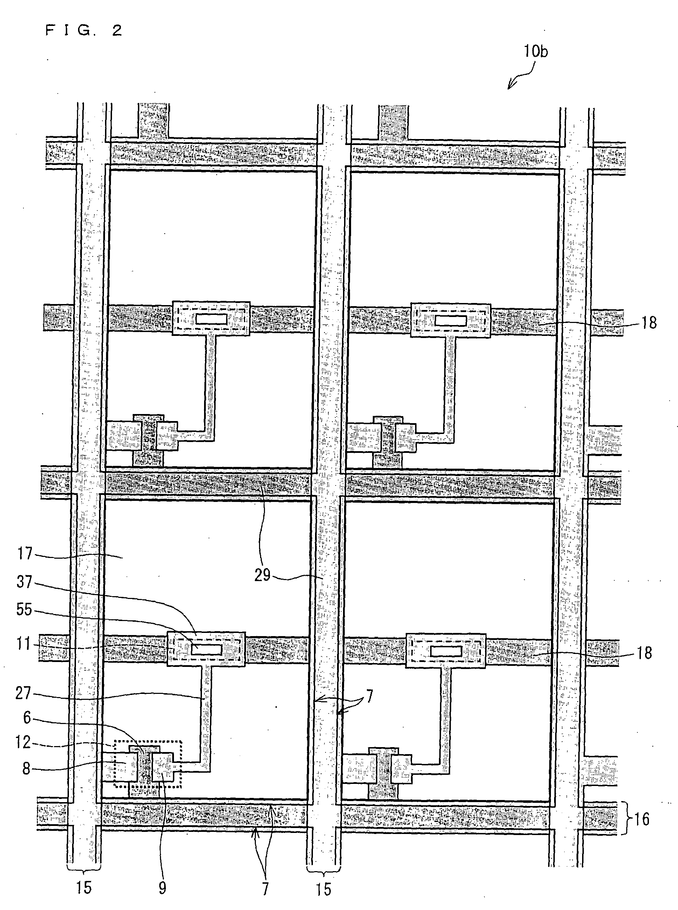

   Fig. 2 is a plan view illustrating another arrangement of a liquid crystal panel in accordance with the first embodiment.
Fig. 3

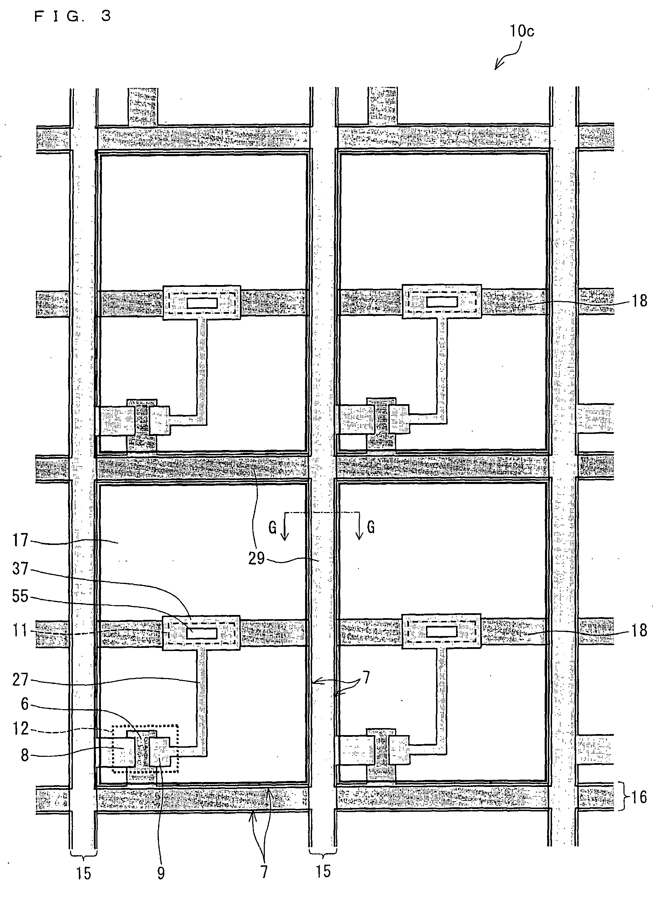

   Fig. 3 is a plan view illustrating another arrangement of a liquid crystal panel in accordance with the first embodiment.
Fig. 4

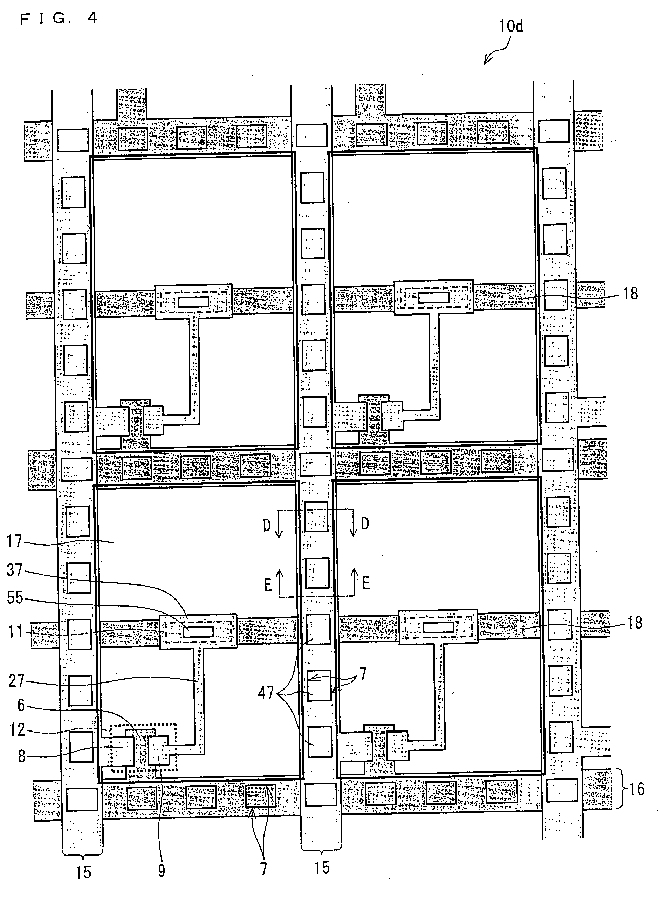

   Fig. 4 is a plan view illustrating another arrangement of a liquid crystal panel in accordance with the first embodiment.
Fig. 5

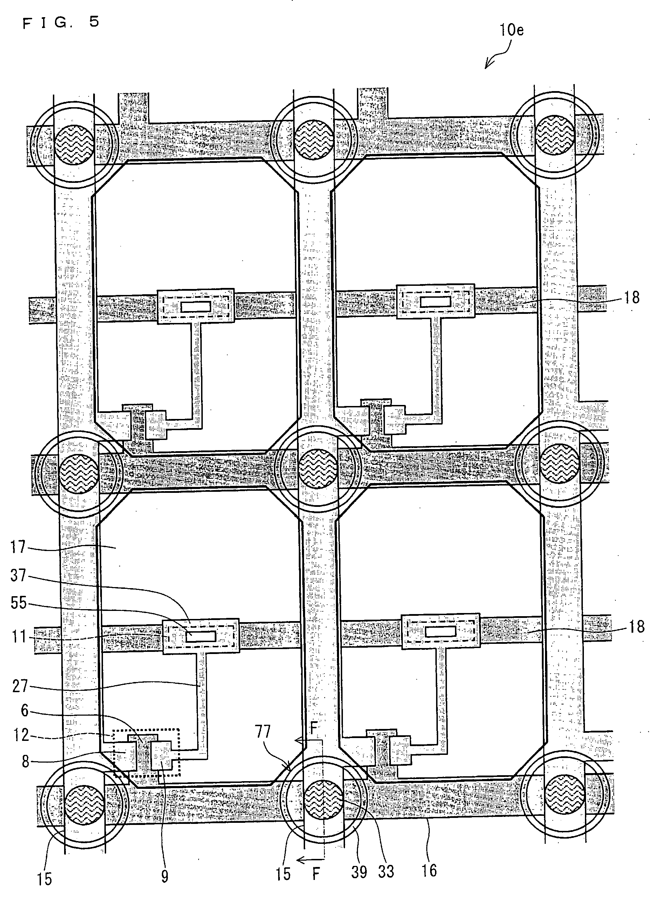

   Fig. 5 is a plan view illustrating an arrangement of a liquid crystal panel in accordance with a second embodiment of the present invention.
Fig. 6

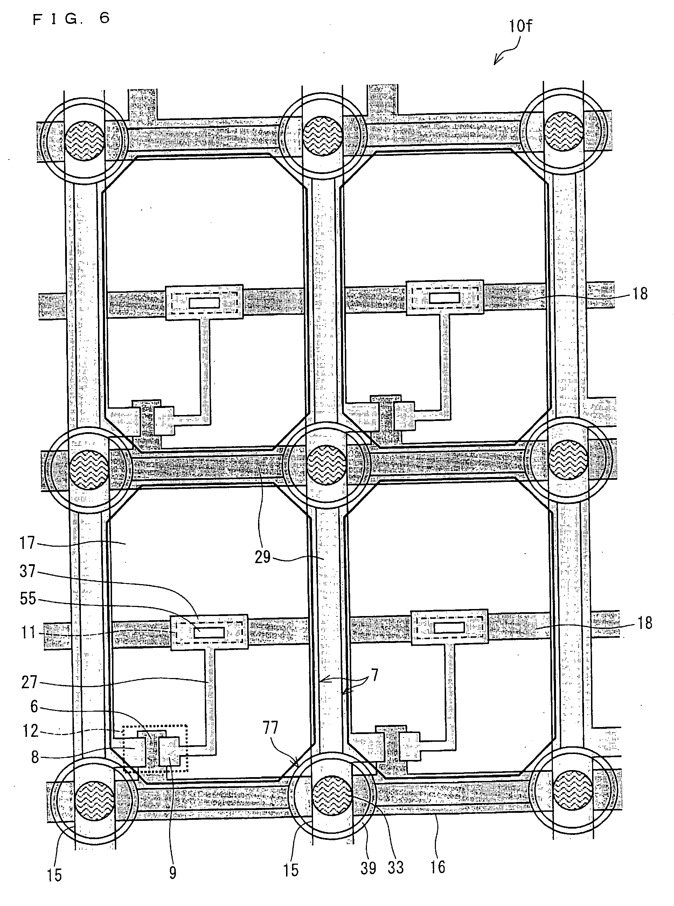

   Fig. 6 is a plan view illustrating another arrangement of a liquid crystal panel in accordance with the second embodiment.
Fig. 7

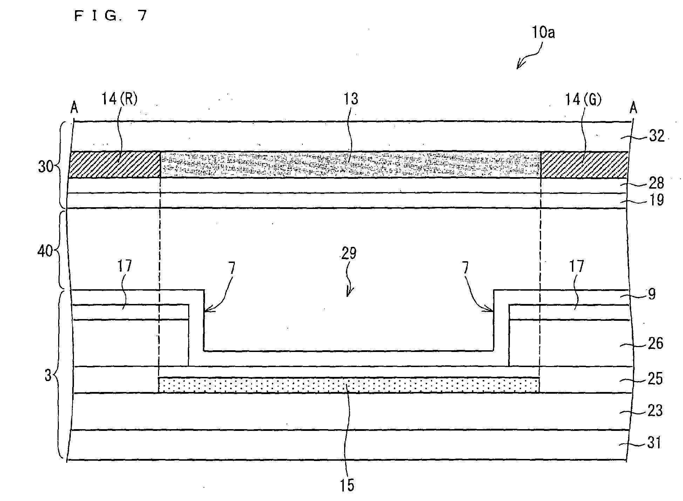

   Fig. 7 is a cross sectional view taken on line A-A of the liquid crystal panel illustrated in Fig. 1.
Fig. 8

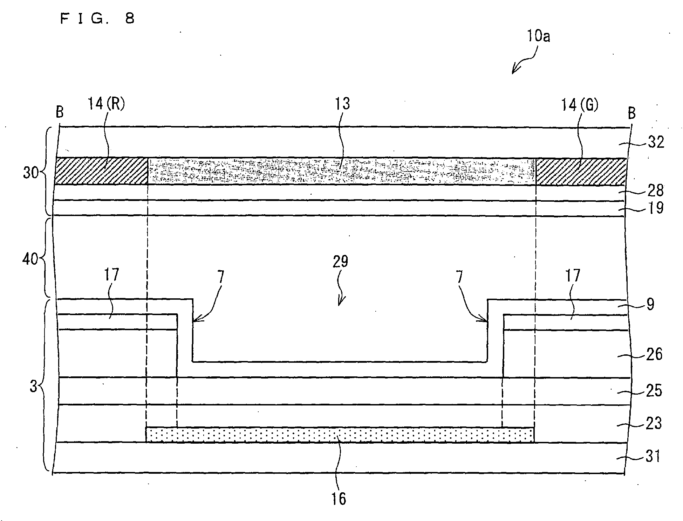

   Fig. 8 is a cross sectional view taken on line B-B of the liquid crystal panel illustrated in Fig. 1.
Fig. 9

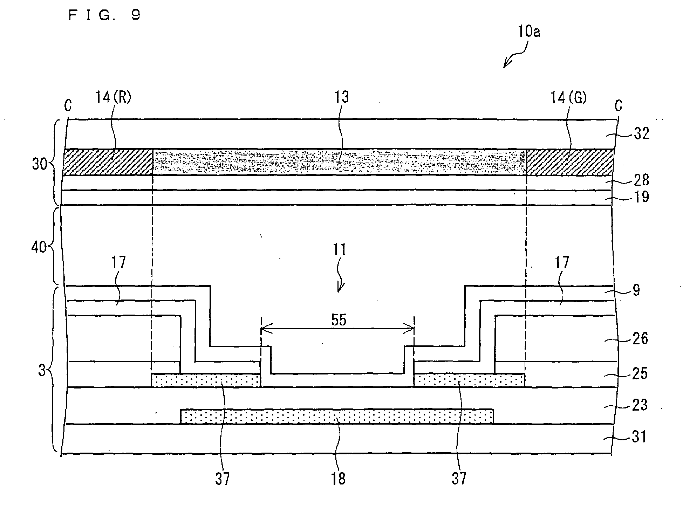

   Fig. 9 is a cross sectional view taken on line C-C of the liquid crystal panel illustrated in Fig. 1.
Fig. 10

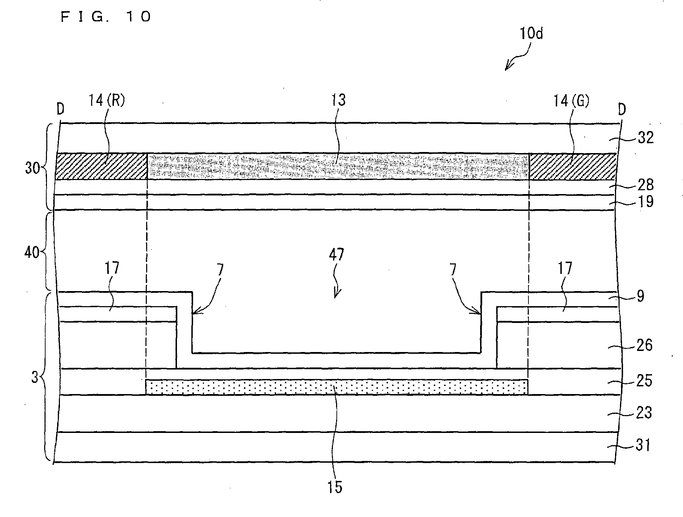

   Fig. 10 is a cross sectional view taken on line D-D of the liquid crystal panel illustrated in Fig. 4.
Fig. 11

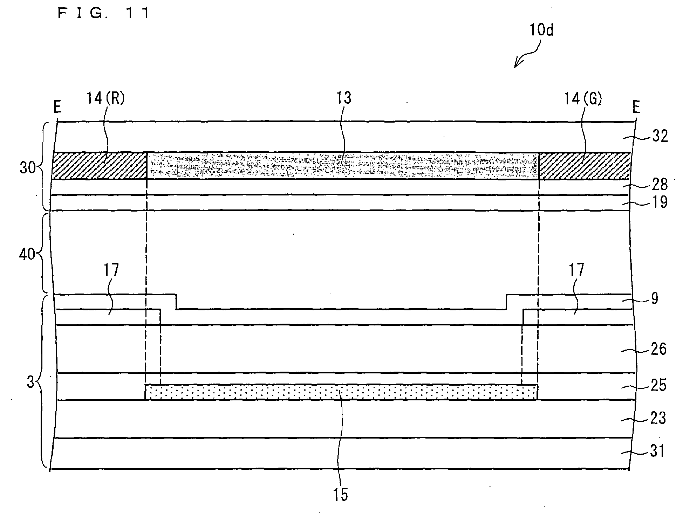

   Fig. 11 is a cross sectional view taken on line E-E of the liquid crystal panel illustrated in Fig. 4.
Fig. 12

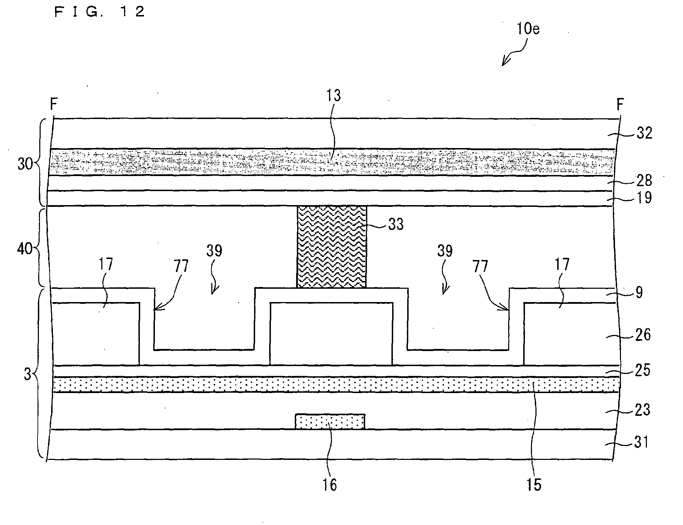

   Fig. 12 is a cross sectional view taken on line F-F of the liquid crystal panel illustrated in Fig. 5.
Fig. 13

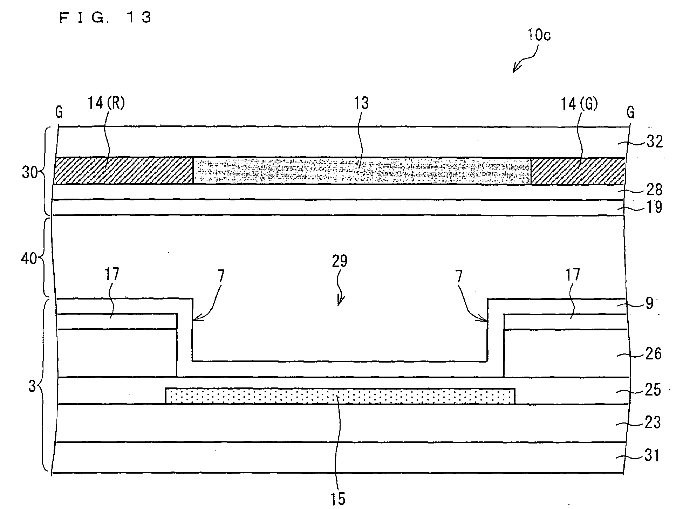

   Fig. 13 is a cross sectional view taken on line G-G of the liquid crystal panel illustrated in Fig. 3.
Fig. 14

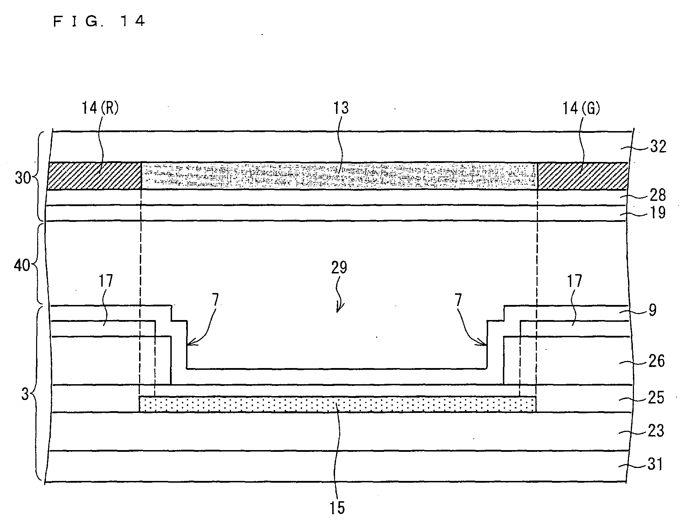

   Fig. 14 is a cross sectional view illustrating another arrangement of a liquid crystal panel in accordance with the first embodiment.
Fig. 15

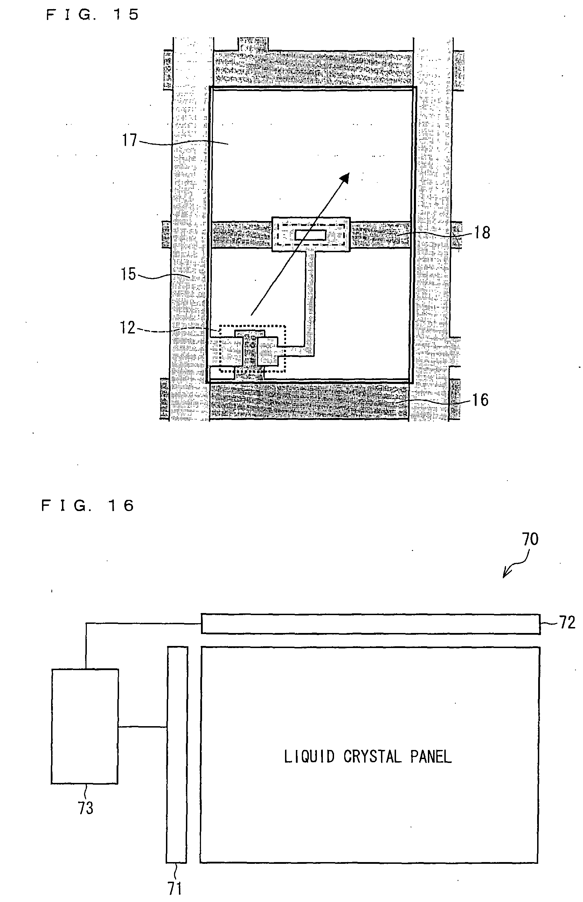

   Fig. 15 is a plan view illustrating a rubbing direction of the present liquid crystal panel.
Fig. 16
   Fig. 16 is a plan view illustrating an arrangement of a liquid crystal display apparatus in accordance with the present embodiment.
Fig. 17
   In Fig. 17, (a) through (d) are schematic views illustrating an alignment transition of an OCB mode liquid crystal panel.
Fig. 18

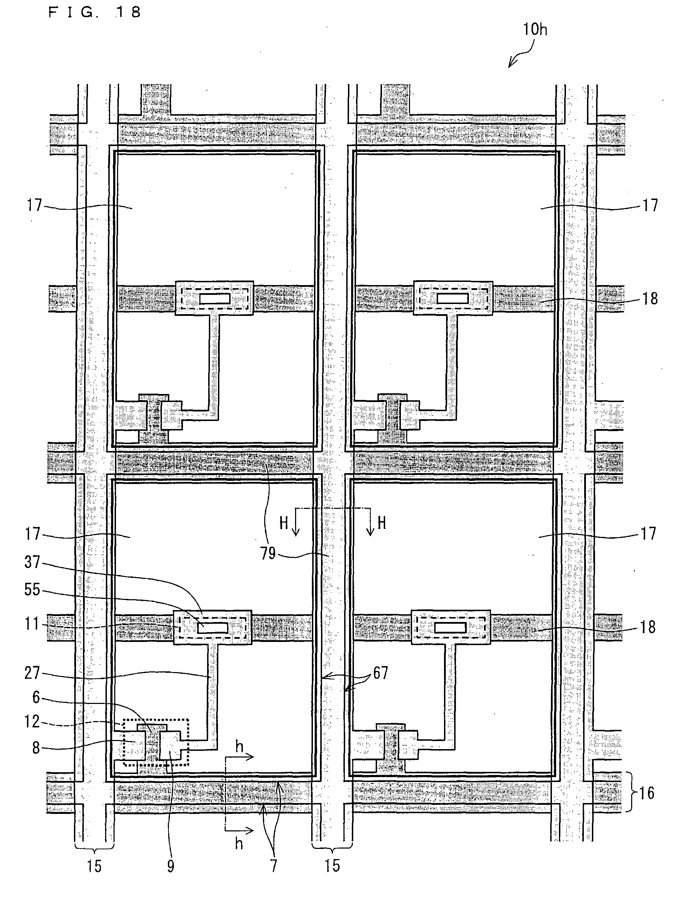

   Fig. 18 is a plan view illustrating another arrangement of a liquid crystal panel in accordance with the first embodiment.
Fig. 19

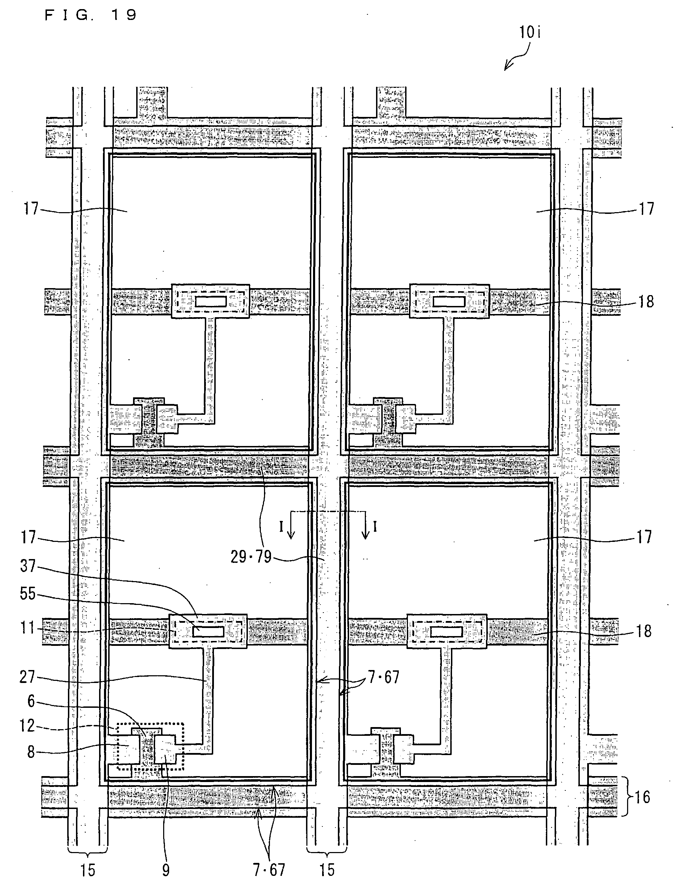

   Fig. 19 is a plan view illustrating another arrangement of a liquid crystal panel in accordance with the first embodiment.
Fig. 20

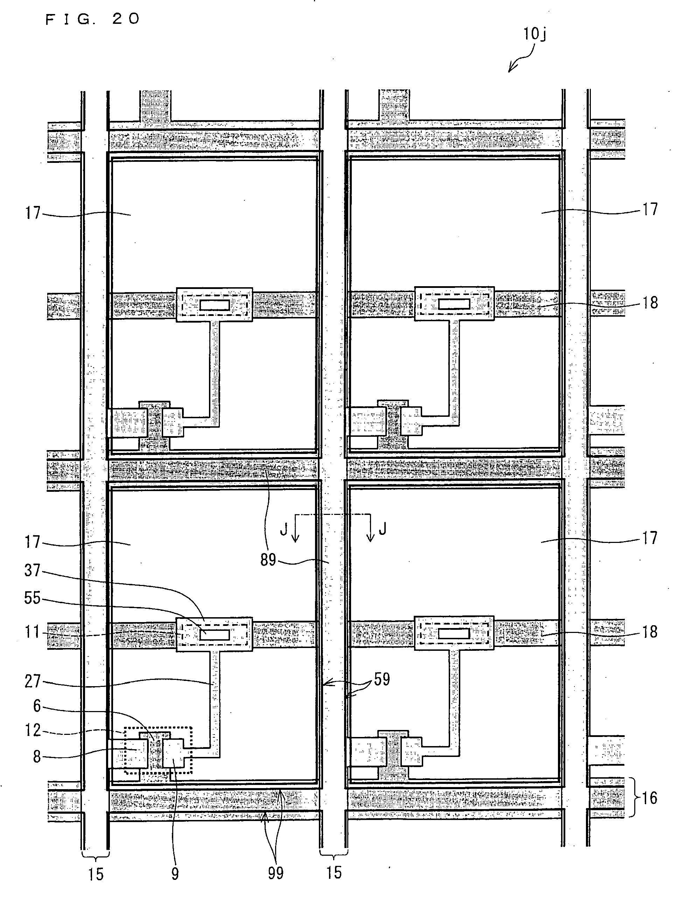

   Fig. 20 is a plan view illustrating another arrangement of a liquid crystal panel in accordance with the first embodiment.
Fig. 21

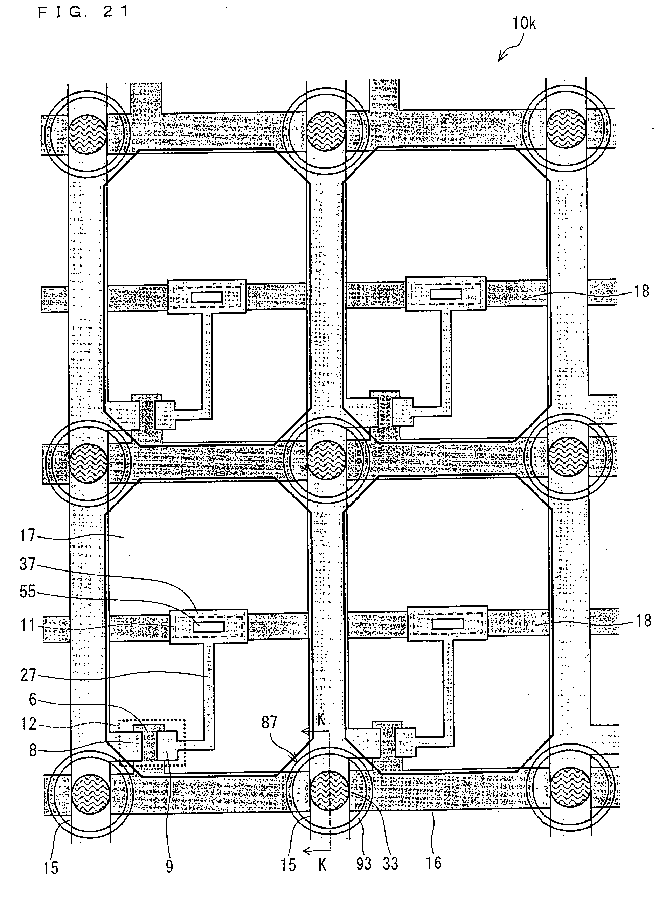

   Fig. 21 is a plan view illustrating another arrangement of a liquid crystal panel in accordance with the second embodiment.
Fig. 22

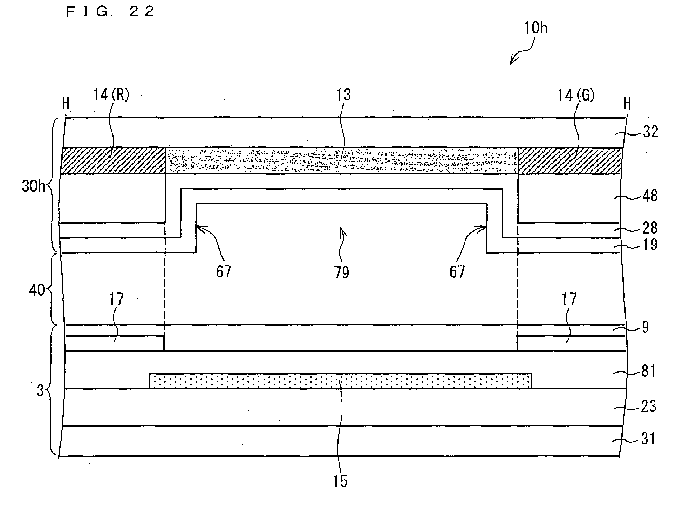

   Fig. 22 is a cross sectional view taken on line H-H of the liquid crystal panel illustrated in Fig. 18.
Fig. 23

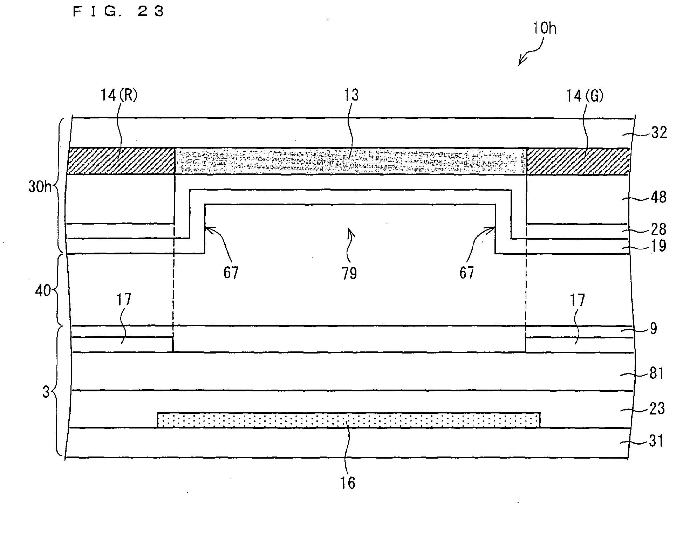

   Fig. 23 is a cross sectional view taken on line h-h of the liquid crystal panel illustrated in Fig. 18.
Fig. 24

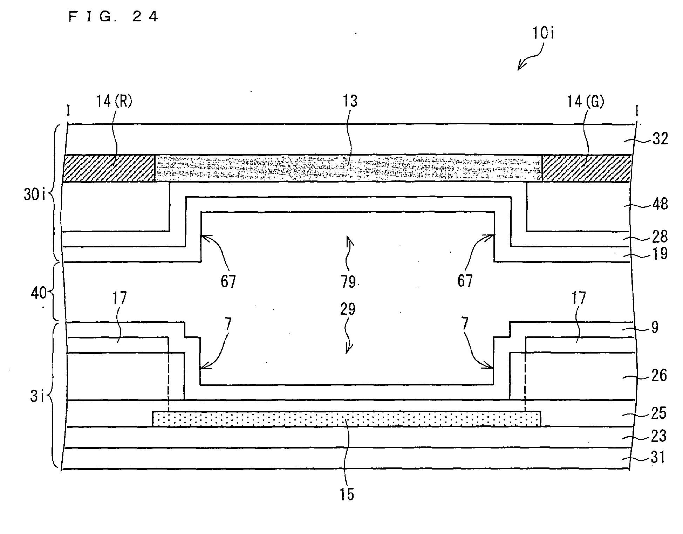

   Fig. 24 is a cross sectional view taken on line I-I of the liquid crystal panel illustrated in Fig. 19.
Fig. 25

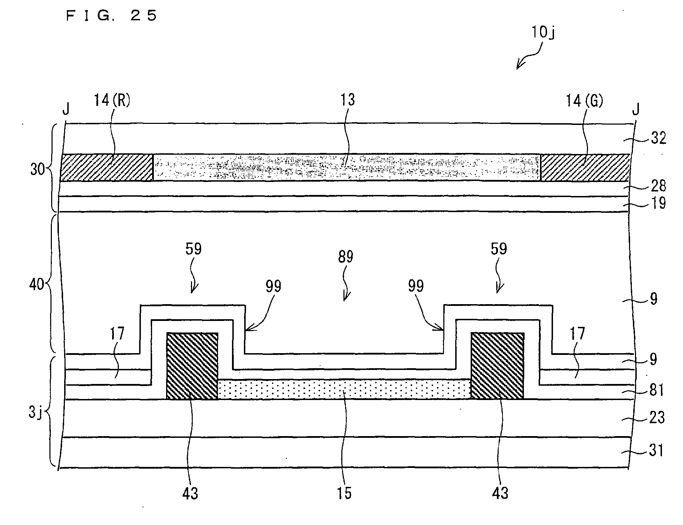

   Fig. 25 is a cross sectional view taken on line J-J of the liquid crystal panel illustrated in Fig. 20.
Fig. 26

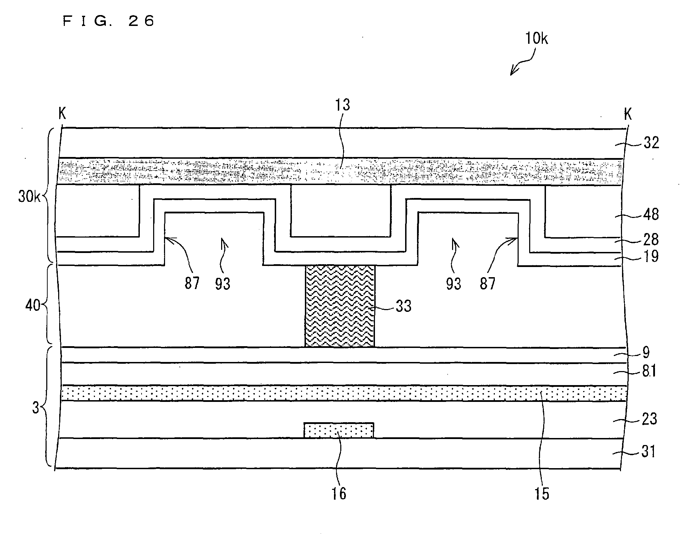

   Fig. 26 is a cross sectional view taken on line K-K of the liquid crystal panel illustrated in Fig. 21.
Fig. 27

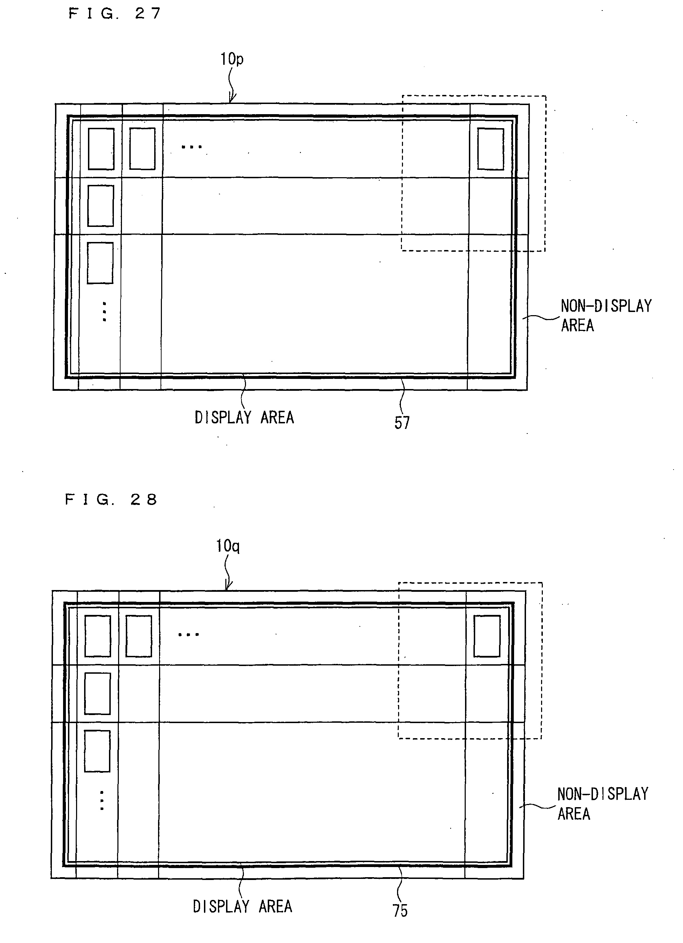

   Fig. 27 is a plan view illustrating an arrangement of a liquid crystal panel in accordance with a third embodiment.
Fig. 28
   Fig. 28 is a plan view illustrating another arrangement of a liquid crystal panel in accordance with the third embodiment.
Fig. 29

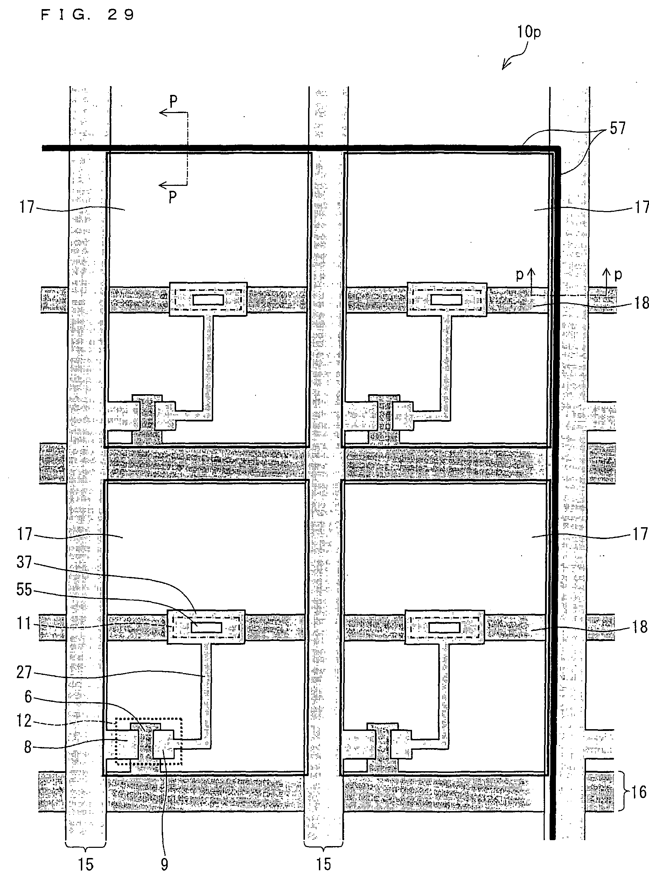

   Fig. 29 is an enlarged plan view illustrating a part of the liquid crystal panel illustrated in Fig. 27.
Fig. 30

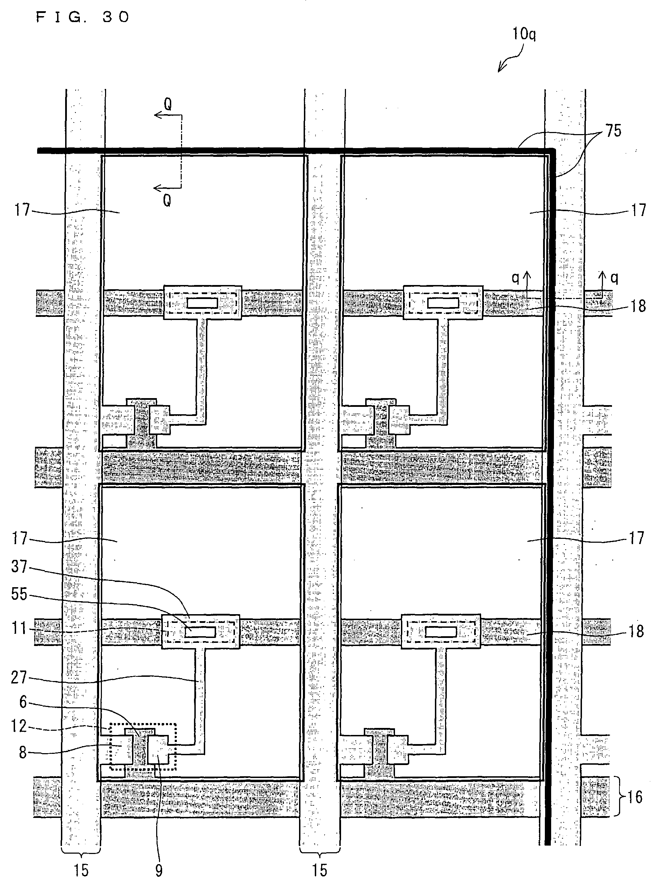

   Fig. 30 is an enlarged plan view illustrating a part of the liquid crystal panel illustrated in Fig. 28.
Fig. 31

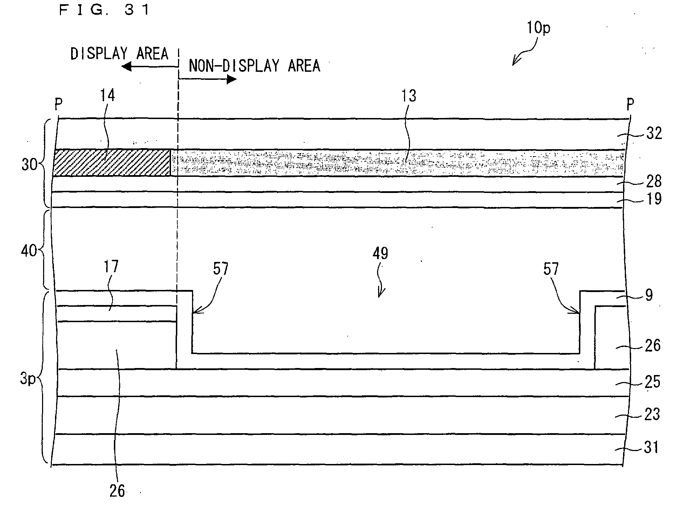

   Fig. 31 is a cross sectional view taken on line P-P of the liquid crystal panel illustrated in Fig. 29.
Fig. 32

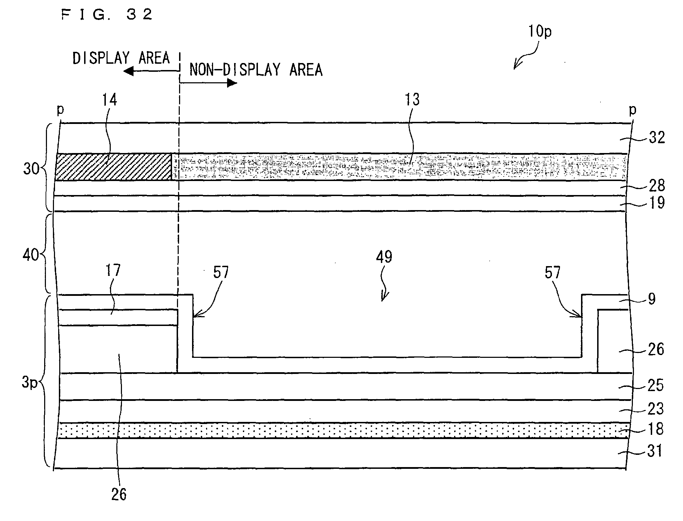

   Fig. 32 is a cross sectional view taken on line p-p of the liquid crystal panel illustrated in Fig. 29.
Fig. 33

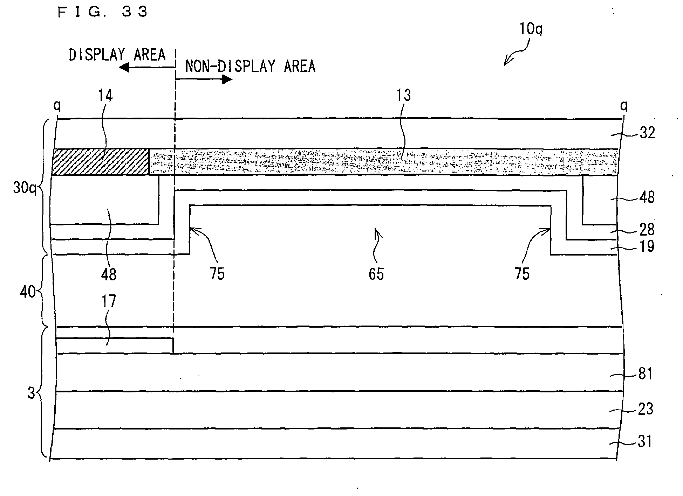

   Fig. 33 is a cross sectional view taken on line q-q of the liquid crystal panel illustrated in Fig. 30.
Fig. 34

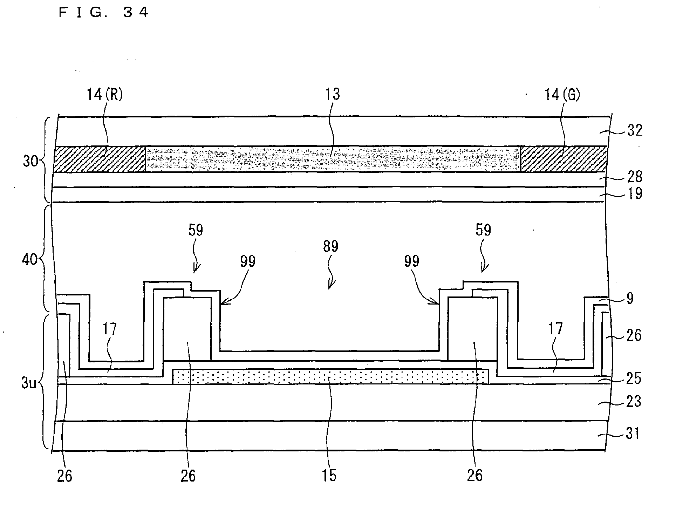

   Fig. 34 is a cross sectional view illustrating another arrangement of a liquid crystal panel illustrated in Fig. 20.
Fig. 35
   Fig. 35 is a plan view illustrating a display/non-display area of a typical liquid crystal panel.
Fig. 36
   Fig. 36 is a cross sectional view explaining a reverse transition which occurs in a conventional liquid crystal panel.
Fig. 37
   Fig. 37 is a plan view illustrating an arrangement of a conventional liquid crystal panel.

### Reference Signs List

- 10a to 10f, 10h to 10k, 10p, 10q: liquid crystal panel
- 3: active matrix substrate
- 7: 57 · 75 · 77 step section
- 9: alignment film
- 12: TFT
- 13: black matrix
- 14: color layer
- 15: data signal line
- 16: scanning signal line
- 17: pixel electrode
- 18: retention capacitor wire
- 19: alignment film
- 23: gate insulating film
- 25: first interlayer insulating film
- 26: second interlayer insulating film
- 28: counter electrode
- 29: 65 groove
- 30: color filter substrate (counter substrate)
- 33: spacer
- 39: trench-like recess section
- 40: liquid crystal layer
- 47: depression
- 55: opening (of a pixel electrode)
- 59: embankment
- 81: interlayer insulating film

### Description of Embodiments

### First Embodiment

One embodiment of the present invention is described below with reference to Figs. 1 through 26. Fig. 1 is a plan view illustrating a part of a liquid crystal panel in accordance with the present embodiment (however a liquid crystal layer and a color filter substrate have been omitted). Fig. 7 is a cross sectional view taken on line A-A in Fig. 1. Fig. 8 is a cross sectional view taken on line B-B in Fig. 1. Further, Fig. 9 is a cross sectional view taken on line C-C in Fig. 1.

As illustrated in Fig. 7, a liquid crystal panel 10a is an OCB mode liquid crystal panel which includes: an active matrix substrate 3, a color filter substrate 30, and a liquid crystal layer 40 provided between the two substrates (3 and 30).

As illustrated in Fig. 1, the active matrix substrate 3 includes: scanning signal lines 16 extending along a horizontal direction in Fig. 1; data signal lines 15 extending along a vertical direction in Fig. 1; TFTs 12 that are provided in respective pixel areas, which each of the pixel areas is surrounded by the respective scanning signal lines 16 and data signal lines 15; retention capacitor wires 18 extending along a horizontal direction in Fig. 1 so as to pass transversely through respective pixel areas; and pixel electrodes 17 which overlap the entire pixel areas, respectively. The active matrix substrate 3 includes: drain lead-out wires 27 lead out from respective drain electrodes 9 of respective TFTs 12; drain lead-out electrodes 37 which are connected to respective drain lead-out wires 27; and contact holes 11. Each of the TFTs 12 has (i) a source electrode 8 connected to a respective data signal line 15, (ii) a gate electrode 6 connected to a respective scanning signal line 16, and (iii) a drain electrode 9 connected to a respective pixel electrode 17 via a respective drain lead-out wire 27, a respective drain lead-out electrode 37, and a respective contact hole 11. The drain lead-out electrode 37 is provided so as to face a respective retention capacitor wire 18. A retention capacitor is constructed by the drain lead-out electrode 37, the retention capacitor wire 18, and an insulating film (gate insulating film) provided between the drain lead-out electrode 37 and the retention capacitor wire 18.

The active matrix substrate 3 has a surface on which grooves 29 are provided in grid-like fashion such that (i) a corresponding groove 29, (ii) at least one of the data signal lines 15 and the scanning signal lines 16, and (iii) a corresponding gap between two adjacent pixel electrodes 17 overlap each other. Step sections 7 for suppressing reverse transition (from a bend alignment to a splay alignment) are provided on the surface of the active matrix substrate 3 by providing the grooves 29.

The following description specifically explains an arrangement of a liquid crystal panel 10a, with reference to Figs. 7 through 9 and Fig. 1.

The color filter substrate 30 has, formed on a transparent substrate 32, (i) a black matrix 13 made of a light shielding film and (ii) color layers 14 each having one of colors red (R), green (G), and blue (B); and a counter electrode 28 is provided so as to cover the black matrix 13 and the color layers 14. Moreover, an alignment film 19 is provided on the counter electrode 28. The color layers 14 are provided regularly for respective pixel areas, and the black matrix 13 is provided in a respective gap between the color layers 14. That is to say, the black matrix 13 is formed so as to overlap the respective signal lines (data signal lines 15, scanning signal lines 16) of the active matrix substrate 3.

Moreover, in the active matrix substrate 3, the scanning signal lines 16, the retention capacitor wires 18 and gate electrodes 6 of the TFTs 12 (see Fig. 1) are provided on a transparent substrate 31, and a gate insulating film 23 is provided above this arrangement. The gate insulating film 23 has the data signal lines 15, a semiconductor layer (not illustrated) which constructs a channel for TFTs 12, source electrodes 8 and drain electrodes 9 of the TFTs 12 (see Fig. 1), the drain lead-out wires 27 (see Fig. 1), and the drain lead-out electrodes 37 provided thereon, and a first interlayer insulating film 25 and a second interlayer insulating film 26 are successively provided above this arrangement. Pixel electrodes 17 are provided above the second interlayer insulating film 26, and an alignment film 9 is provided above the pixel electrodes 17. The alignment film 9 causes liquid crystal molecules to align, and the alignment film is rubbed in an oblique direction (in an oblique direction of the pixel electrodes 17) as illustrated in Fig. 15. Note that a level difference and the like which generate at parts where the gate insulating film 23 runs onto the scanning signal lines 16 and the like is ignored in the figures.

Here, as illustrated in Figs. 7 and 8, the second interlayer insulating film 26 has groove-like hollow sections at parts where the second interlayer insulating film 26 overlaps at least one of the data signal lines 15 and the scanning signal lines 16. Formation of the hollow sections provides the grooves 29 on the surface of the active matrix substrate 3. A periphery of each of the pixel electrodes and the respective signal lines (data signal lines 15 and scanning signal lines 16) overlap each other, and furthermore, the pixel electrodes 17 has their ends (edges) in line with respective side walls of respective hollow sections of the second interlayer insulating film 26. The grooves 29 are provided at corresponding gaps between adjacent pixel electrodes.

Furthermore, as illustrated in Figs. 1 and 9, the first interlayer insulating film 25 and the second interlayer insulating film 26 have rectangular-shaped hollow sections at parts where the first interlayer insulating film 25, second interlayer insulating film 26 and the respective retention capacitor wires 18 overlap each other. The hollow sections serve as contact holes 11 for connecting the respective pixel electrodes 17 and drain lead-out electrodes 37. Furthermore, the drain lead-out electrodes 37 have rectangular-shaped hollow sections within the contact holes 11, respectively, and the pixel electrodes 17 have openings 55, which openings 55 superpose corresponding hollow sections of the drain lead-out electrodes 37. This forms a superposed section in a center of a pixel area, of (i) the retention capacitor wires 18, (ii) the corresponding hollow section of the drain lead-out electrodes 37, and (iii) the corresponding opening 55 of the pixel electrodes 17.

In a liquid crystal display apparatus which employs the liquid crystal panel 10a, a high voltage is applied between the counter electrode 28 of the color filter substrate and the retention capacitor wires 18 while the power is turned ON. This causes the liquid crystal molecules in a center of the pixel (transition nucleus) to transition from a splay alignment to a bend alignment by (i) a transverse electric field formed between the retention capacitor wires 18 and the respective pixel electrodes 17 in the vicinity of the corresponding openings 55, (ii) a rubbing direction (oblique direction; see Fig. 15) of the alignment film 9, and (iii) a strong vertical electric field between the retention capacitor wires 18 and the respective counter electrode 28 acting in combination with each other. Further, this transition spreads throughout the whole of the pixel. Thereafter, display is carried out in a state in which the whole pixel is transitioned to the bend alignment (see (a) through (d) of Fig. 17).

In the liquid crystal panel 10a, the grooves 29 are formed in grid-like fashion on a surface of the active matrix substrate, in regions where (i) at least one of the data signal lines 15 and the scanning signal lines 16 and (ii) a corresponding gap between two adjacent pixel electrodes 17 overlap each other. Therefore, even if reverse transition from a bend alignment to a splay alignment occurs during display to liquid molecules above the signal lines due to the transverse electric field generated between (i) the data signal lines 15 or scanning signal lines 16 and (ii) the corresponding periphery of the pixel electrodes 17, spreading of the splay alignment is suppressed by the step sections 7. This thus allows suppression of a splay alignment above the signal lines to spread in a pixel during white display, thereby improving display quality.

The following description is a brief explanation of a method for manufacturing an active matrix substrate used in the present liquid crystal panel. First, scanning signal lines 16 (including gate electrodes 6 of TFTs 12) and retention capacitor wires 18 are provided on a glass substrate 31 on which processing such as a base coating has been carried out. The lines and wires are provided by (i) forming a metal film on the entire substrate 31 by sputtering, and (ii) patterning this metal film in a photolithography process. The metal film has a laminated structure including Ta and its nitride, however the metal film does not necessarily have to be a laminated structure. Moreover, metals such as Ti and Al may be used as the material of the metal film.

Next, surfaces of the scanning signal lines 16 and the retention capacitor wires 18 are anodized, and thereafter the gate insulating film 23 is formed on the scanning signal lines 16 and retention capacitor wires 18 by use of silicon nitride or the like. The gate insulating film 23 may or may not be patterned.

A semiconductor layer is formed by a CVD method so as to form the TFTs 12; followed by patterning the semiconductor layer in a lithography process, impurities are injected so as to form a channel region of the TFTs 12.

Subsequently, a metal film is formed by sputtering, and this metal film is patterned in a photolithography process. As a result, the data signal lines 15 and the electrodes (source electrodes 8, drain electrodes 9) of the TFTs 12 are formed. Metal such as Ta, Ti, or Al is used as material for the data signal lines 15, similarly to the scanning signal lines 16 and the retention capacitor wires 18.

Thereafter, the TFTs 12 are covered by the first interlayer insulating film 25 (not illustrated). This prevents dispersion of impurities to the TFT part and improves performance of the semiconductor.

Next, a second interlayer insulating film 26 (organic interlayer insulating film) is formed on the first interlayer insulating film 25. That is, a photoresist made of polymer material is applied by spin coating; thereafter, the photoresist is exposed to light and is developed, such that (i) hollow sections for providing the grooves 29, with which at least one of the data signal lines 15 and the scanning signal lines 16 overlap, and (ii) hollow sections that serve as contact holes, with which the drain lead-out electrodes 37 overlap, are formed.

Upon light exposure and development, just the second interlayer insulating film is removed at the hollow sections for providing the grooves 29, however the first interlayer insulating film is also removed in addition to the second interlayer insulating film for the hollow sections that serve as the contact holes. Thereafter, the photoresist is cured by calcinating the photoresist in an oven around 180 °C. This cured photoresist serves as the second interlayer insulating film 26. The cured second interlayer insulating film 26 has an average thickness of 3 µm.

A positive-type resist or a negative-type resist may be used as the photoresist material. Thereafter, a metal film (ITO) is formed on the second interlayer insulating film 26 by sputtering, and this metal film is patterned in a photolithography process so as to form pixel electrodes 17.

The following description briefly explains a method for manufacturing the present liquid crystal panel.

First, the black matrix 13 which partition the pixels and the color layers (color filter) 14 of R, G, and B is arranged in a stripe alignment on the glass substrate 32. Subsequently, ITO is applied by sputtering so as to form a counter electrode 28. This process obtains the color filter substrate.

Following this, a polyimide for parallel alignment is printed on each of the active matrix substrate and the color filter substrate. This polyimide is calcinated at 200 °C in an oven for one hour so as to form the alignment film 9 of the active matrix substrate and an alignment film 19 of the color filter substrate. The calcinated alignment film has a thickness of approximately 100 nm. Furthermore, the alignment film is rubbed in one direction with a cotton cloth (see Fig. 15 for a rubbing direction), so that an alignment direction becomes parallel when the active matrix substrate and the color filter substrate are adhered together.

Thereafter, an appropriate amount of plastic spacer is sprayed to the active matrix substrate in a dry method. A sealing material is printed around a screen on the counter substrate; the active matrix substrate and the counter substrate are aligned in position and adhered together with the sealing material. A thermosetting resin is used as the sealing material; calcinating is carried out for one and a half hours in an oven at 170 °C while applying pressure to the substrates. Moreover, liquid crystal material is injected between the two substrates by a vacuum filling method. Furthermore, in order to attain a broad viewing angle, a phase plate for view angle compensation is adhered to both sides of a panel. Furthermore, polarizing plates are adhered to both sides of the panel on which the phase plates are adhered in such a manner that respective absorbing axes run orthogonally. The present liquid crystal panel is attained as such.

In the liquid crystal panel 10a, the periphery of the pixel electrodes 17 and the respective signal lines (data signal lines 15 and scanning signal lines 16) overlap each other, however the arrangement is not limited to this. The liquid crystal panel may have edges (sides) of the pixel electrodes 17 and respective edges (sides) of the signal lines (data signal lines 15 and scanning signal lines 16) overlap (be vertically in line with) each other, as in a liquid crystal panel 10b illustrated in Fig. 2. Moreover, the pixel electrodes 17 and the signal lines (data signal lines 15 and scanning signal lines 16) may be not overlapping each other, as in a liquid crystal panel 10c illustrated in Fig. 3. A cross sectional view taken on line G-G in Fig. 3 is illustrated in Fig. 13.

In the liquid crystal panel 10a, edges of the pixel electrodes 17 and respective side walls of respective hollow sections of the second interlayer insulating film 26 are in line with each other, however it is not limited to this arrangement. The side walls of the hollow sections of the second interlayer insulating film 26 may be formed outside of respective edges of the pixel electrodes 17, as illustrated in Fig. 14. In this case also, the grooves 29 (step sections 7) are provided in gaps between adjacent pixel electrodes 17.

Moreover, the present liquid crystal panel may be arranged as in a liquid crystal panel 10d illustrated in Fig. 4 (however, a liquid crystal layer and a color filter substrate have been omitted). Fig. 10 is a cross sectional view taken on line D-D of Fig. 4, and Fig. 11 is a cross sectional view taken on line E-E of Fig. 4.

As illustrated in Figs. 4, 10, and 11, a plurality of depressions 47 are formed on a surface of the active matrix substrate of the liquid crystal panel 10d, in regions where (i) at least one of the data signal line 15 and the scanning signal line 16 and (ii) a corresponding gap between two adjacent pixel electrodes 17 overlap each other. Step sections 7 for suppressing reverse transition (from a bend alignment to a splay alignment) are provided on the surface of the active matrix substrate by providing the depressions 47. The depressions 47 are of a rectangular shape, and are aligned in regions (grid-like fashion regions) above the signal lines (data signal lines 15 and scanning signal lines 16) with intervals between adjacent depressions 47. In this case, a ratio of a distance in a longitudinal direction of the depressions 47 and the interval is, for example, 1:1. Note that the periphery of the pixel electrodes 17 and the respective signal lines (data signal lines 15 and scanning signal lines 16) overlap each other, the edges of the pixel electrodes 17 are in line with respective side walls of respective hollow sections of the second interlayer insulating film 26, and the grooves 29 are provided in corresponding gaps between adjacent pixel electrodes.

With the liquid crystal panel 10d, even if the liquid crystal molecules above the signal lines reverse transition to a splay alignment due to the transverse electric field between (i) the data signal lines 15 or the scanning signal lines 16 and (ii) the periphery of the pixel electrodes 17, spreading of the reverse transition is suppressed by the step sections 7. As a result, it is possible to suppress the spreading of the splay alignment in a pixel during white display, which therefore improves display quality.

In the above arrangement, the second interlayer insulating film is hollowed (totally removed) at a position in which the grooves are formed, however the arrangement is not limited to this arrangement. The second interlayer insulating film 26 may be removed by just half of the film. Note that the second interlayer insulating film 26 has a thickness of approximately 3 µm, and in a case where the second interlayer insulating film 26 is totally removed, a level difference of around 3 µm is thus formed.

Moreover, the present liquid crystal panel may be arranged as in a liquid crystal panel 10h illustrated in Fig. 18 (however, the liquid crystal layer, and the color layer and the black matrix of the color filter substrate have been omitted). Fig. 22 is a cross sectional view taken on line H-H in Fig. 18, and Fig. 23 is a cross sectional view taken on line h-h in Fig. 18.

As illustrated in Figs. 22 and 23, grooves 79 are provided in a grid-like fashion such that (i) a corresponding groove 79, (ii) at least one of the data signal line 15 and the scanning signal lines 16 and (ii) a corresponding gap between two adjacent pixel electrodes 17 overlap each other, on a surface of a color filter substrate of the liquid crystal panel 10h. Step sections 67 for suppressing reverse transition (from a bend alignment to a splay alignment) are provided on the surface of the color filter substrate by providing the grooves 79.

The color filter substrate 30h of the liquid crystal panel 10h has, on a transparent substrate 32, a black matrix 13 made of a light shielding film, and color layers 14 which have one of colors red (R), green (G), and blue (B); and an insulating film 48 is provided so as to cover the black matrix 13 and the color layers 14. The insulating film 48 may be an insulating film (flattening film) for flattening a bulge generated at a boundary section between the black matrix 13 and respective color layers 14 (generated by having end sections of the black matrix 13 and color layers 14 overlap each other). The counter electrode 28 is provided on the insulating film 48, and an alignment film 19 is provided so as to cover the counter electrode 28. The insulating film 48 has groove-like hollow sections provided at a part where the insulating film 48 and at least one of the data signal lines 15 and the scanning signal lines 16 overlap each other, and the grooves 79 are provided on a surface of the color filter substrate 30h by providing the hollow sections. Note that the periphery of the pixel electrodes 17 and the respective signal lines (data signal lines 15 and scanning signal lines 16) overlap each other, edges of the pixel electrodes 17 are in line with respective side walls of respective hollow sections of the insulating film 48, and the grooves 79 and corresponding gaps between adjacent pixel electrodes overlap each other.

With the liquid crystal panel 10h, even if reverse transition to a splay alignment occurs in liquid crystal molecules above the signal lines due to transverse electric field generated between (i) the data signal lines 15 or the scanning signal lines 16 and (ii) the periphery of the pixel electrodes 17, spreading of the reverse transition is suppressed by the step sections 67. As a result, it is possible to suppress the spreading of the splay alignment in a pixel during white display, which therefore improves display quality.

In the liquid crystal panel 10h, the periphery of the pixel electrodes 17 and the respective signal lines (data signal lines 15 and scanning signal lines 16) overlap each other. However, the arrangement is not limited to this. The pixel electrodes 17 may have its edges and the respective edges of the signal lines (data signal lines 15 and scanning signal lines 16) overlap (be vertically in line with) each other. Moreover, the pixel electrodes 17 may be arranged not overlapping the signal lines (data signal lines 15 and scanning signal lines 16). In the liquid crystal panel 10h, the edges of the pixel electrodes 17 and the respective side walls of respective hollow sections of the insulating film 48 overlap (be vertically in line with) each other, however the arrangement is not limited to this. The side walls of the hollow sections of the insulating film 48 may be arranged not overlapping the pixel electrodes 17. In this case also, the grooves 17 (step sections 67) and the corresponding gaps of adjacent pixel electrodes 17 overlap each other.

The present liquid crystal panel may be arranged as in a liquid crystal panel 101 illustrated in Fig. 19 (however, the liquid crystal layer, and the color layer and black matrix of the color filter substrate have been omitted). Fig. 24 is a cross sectional view taken on line I-I in Fig. 19.

As illustrated in Figs. 19 and 24, grooves 79i are provided on a surface of a color filter substrate 30i of a liquid crystal panel 10i in grid-like fashion such that (i) a corresponding groove 79, (ii) at least one of the data signal lines 15 and the scanning signal lines 16 and (iii) a corresponding gap between two adjacent pixel electrodes 17 overlap each other; and grooves 29 are provided on a surface of an active matrix substrate 3i in grid-like fashion such that (i) a corresponding groove 29, (ii) at least one of the data signal lines 15 and the scanning signal lines 16 and (iii) a corresponding gap between two adjacent pixel electrodes 17 overlap each other. Namely, step sections 67 are provided for suppressing reverse transition (from a bend alignment to a splay alignment) by providing the grooves 79, and step sections 7 are provided for suppressing reverse transition (from a bend alignment to a splay alignment) by providing the grooves 29. In Fig. 24, side walls of the grooves 29 are vertically in line with respective side walls of the grooves 79, however the side walls of the grooves 29 and the respective side walls of the grooves 79 may also be not in line with each other. The color filter substrate 30i has the same arrangement as the color filter substrate illustrated in Figs. 22 and 23, and the active matrix substrate 3i has the same as the active matrix substrate illustrated in Fig. 14.

Moreover, the present liquid crystal panel may be arranged as in a liquid crystal panel 10j illustrated in Fig. 20 (however, the liquid crystal layer, and the color layer and black matrix of the color filter substrate have been omitted). Fig. 25 is a cross sectional view taken on line J-J of Fig. 20.

As illustrated in Figs. 20 and 25, a corresponding pair of embankments 59 (ridge-like bulging sections) that face (are substantially parallel to) each other are provided on a surface of a color filter substrate 30j of the liquid crystal panel 10j, such that (i) a gap 89 between the corresponding pair of embankments 59, (ii) at least one of the data signal lines 15 and the scanning signal lines 16 and (iii) a corresponding gap between two adjacent pixel electrodes 17 overlap each other. Step sections 99 for suppressing reverse transition (from a bend alignment to a splay alignment) are provided on the surface of the color filter substrate 30j by providing the embankments 59. As illustrated in Fig. 25, the embankments 59 are formed by having, for example a semiconductor layer 43 remain under a position where the embankments 59 are to be formed (both sides of the data signal lines 15 in the case of Fig. 25). An interlayer insulating film 81 is provided above the semiconductor layer 43 and the data signal lines 15, and the pixel electrodes 17 are provided on the interlayer insulating film 81. Embankments as the foregoing may be constructed by providing an insulating film provided above the TFTs thicker at embankment parts than adjacent parts to the embankment parts. For example, as in an active matrix substrate 3u in Fig. 34, an insulating film provided above the TFTs includes a first interlayer insulating film 25 (for example, an inorganic interlayer insulating film) and a second interlayer insulating film 26 (for example, an organic interlayer insulating film) that is thicker than the first interlayer insulating film 25. Adjacent parts to the embankments 59 have the second interlayer insulating film 26 hollowed, thereby only having the first interlayer insulating film 25 remaining; and the parts of the embankments 59 have the first interlayer insulating film 25 and the second interlayer insulating film 26 remaining. The active matrix substrate 3u has edges of the pixel electrodes 17 and respective data signal lines 15 overlap each other, and (i) the gaps 89 between a corresponding pair of embankments 59 that face each other, (ii) a corresponding gap between two adjacent pixel electrodes 17 and (iii) the data signal lines 15 overlap each other. Further, the step sections 99 for suppressing the reverse transition (from a bend alignment to a splay alignment) are provided on the active matrix substrate 3u by providing the embankments 59.

### Second Embodiment

A second embodiment of the present invention is as described below, with reference to Figs. 5, 6, and 12. Fig. 5 is a plan view illustrating a part of a liquid crystal panel according to the present embodiment (however, the liquid crystal layer and the color filter substrate have been omitted). Fig. 12 is a cross sectional view taken on line F-F in Fig. 5.

As illustrated in Fig 12, a liquid crystal panel 10e is an OCB mode liquid crystal panel, which includes an active matrix substrate 3, a color filter substrate 30, and a liquid crystal layer 40 and a spacer 33 which are provided between the two substrates (3 and 30).

As illustrated in Fig. 5, the active matrix substrate 3 includes: scanning signal lines 16 extending in a horizontal direction in the figure, data signal lines 15 extending in a vertical direction in the figure, TFTs 12 formed in pixel areas that are surrounded by the respective scanning signal lines 16 and data signal lines 15, retention capacity wires 18 extending in a horizontal direction so as to pass transversely through respective pixel areas, and pixel electrodes 17 which overlap the entire pixel areas, respectively. The spacers 33 are provided above intersecting sections of the respective data signal lines 15 and scanning signal lines 16. As illustrated in Fig. 12, the second interlayer insulating film 26 has trench-like hollow sections provided so as to surround respective spacers 33. Each of the hollow sections provides trench-like recess sections 39 on a surface of the active matrix substrate 3, which recess sections 39 surround the respective spacers 33. It is preferable to cut off corners of the pixel electrodes 17 so that the trench-like recess sections 39 and the respective pixel electrodes 17 do not overlap each other (see Fig. 5). This prevents a splay alignment from entering into the pixel electrodes 17 during white display.

With the liquid crystal panel 10e, even if the splay alignment remains in the vicinity of the spacers 33 as a shadow of the spacer 33, the step sections 77 formed by the trench-like recess sections 39 suppress the spreading of the splay alignment. As a result, it is possible to suppress the splay alignment from being spread in a pixel during white display, which therefore improves display quality.

The present liquid crystal panel may also be arranged as illustrated in Fig. 6. Namely, a liquid crystal panel 10f includes spacers 33 provided above intersecting sections of the signal lines (data signal lines 15 and scanning signal lines 16). Further, trench-like recess sections 39 and grooves 29 are provided on a surface of the active matrix substrate, which trench-like recess sections 39 surround respective spacers 33, and which grooves 29 are provided in regions (grid-like regions) above the signal lines however not in the trench-like recess sections 39. That is to say, step sections 77 are formed by providing the trench-like recess sections 39, and the step sections 7 are formed by providing the grooves 29.

With the liquid crystal panel 10f, even if a splay alignment remains in the vicinity of the spacers 33 as a shadow of the spacers 33, the step sections 77 suppress the spreading of the splay alignment. In addition, even if liquid crystal molecules above the signal lines are reversely transitioned due to the transverse electric field generated between (i) the data signal lines 15 or the scanning signal lines 16 and (ii) the respective periphery of the pixel electrodes 17, the step sections 7 or 77 suppress spreading of the reverse transition. As a result, it is possible to suppress spreading of the splay alignment in a pixel during white display, which therefore improves display quality.

The present liquid crystal panel may also be arranged as in a liquid crystal panel 10k illustrated in Fig. 21 (however, the liquid crystal layer and the color layer and black matrix of the color filter substrate have been omitted). Fig. 26 is a cross sectional view taken on a line K-K in Fig. 21. As illustrated in Figs. 21 and 26, the liquid crystal panel 10k includes spacers 33 provided above respective intersecting sections of the signal lines (data signal lines 15 and scanning signal lines 16), and on a surface of the color filter substrate 30k, trench-like recess sections 93 are provided so as to surround the respective spacers 33.

With the liquid crystal panel 10k, even if a splay alignment remains in the vicinity of the spacer 33 as a shadow of the spacer 33, step sections 87 provided by providing the trench-like recess sections 93 suppress spreading of the splay alignment. As a result, it is possible to suppress a splay alignment to spread in a pixel during white display, which therefore improves display quality.

In the above embodiment, the spacers 33 are provided above the respective intersecting sections of the data signal lines 15 and the scanning signal lines 16. However, the arrangement is not limited to this. The spacers 33 may be provided above the data signal lines 15 and the scanning signal lines 16 other than their intersecting sections, and also the spacers 33 may be provided above the TFTs 12.

A liquid crystal display apparatus 70 in accordance with the present embodiment includes, as illustrated in Fig. 16, the foregoing liquid crystal panel, a gate driver 71 and a source driver 72 for driving the liquid crystal panel, and a control device 73 for controlling each of the drivers (71 and 72).

### Third Embodiment

A third embodiment of the present invention is as described below, with reference to Figs. 27 through 33. Fig. 27 is a plan view illustrating an arrangement of a liquid crystal panel in accordance with the present embodiment, and Fig. 29 is an enlarged plan view of a part circled by dotted lines in Fig. 27 (however, the liquid crystal layer and the color filter substrate have been omitted). Fig. 31 is a cross sectional view taken on line P-P in Fig. 29, and Fig. 32 is a cross sectional view taken on line p-p in Fig. 29.

As illustrated in Figs. 29, 31, and 32, a liquid crystal panel 10p is an OCB mode liquid crystal panel including an active matrix substrate 3p, a color filter substrate 30, and a liquid crystal layer 40 provided between the two substrates (3p and 30). The active matrix substrate 3p has scanning signal lines 16, retention capacity wires 18, and gate electrodes 6 (see Fig. 29) of TFTs 12 provided on a transparent substrate 31, and a gate insulating film 23 is provided above these members. Data signal lines 15 (see Fig. 29), a semiconductor layer (not illustrated) which constructs channels of the TFTs 12, source electrodes 8 and drain electrodes of the TFTs 12 (see Fig. 29), drain lead-out wiring 27, and drain lead-out electrodes 37 are provided on the gate insulating film 23; a first interlayer insulating film 25 and a second interlayer insulating film 26 are successively provided above this arrangement. Pixel electrodes 17 are provided on the second interlayer insulating film 26, and an alignment film 9 is formed above the pixel electrodes 17.

On a surface of the active matrix substrate 3p, a groove 49 (recess section) is provided trench-like so as to surround a display-area-corresponding part. Providing the groove 49 thus provides, on the surface of the active matrix substrate 39, the step sections 57 for suppressing reverse transition (from a bend alignment to a splay alignment), which step sections 57 are provided in such a manner that the step sections 57 surround the display-area-corresponding part (see Figs. 27 and 29). More specifically, as illustrated in Figs. 31 and 32, the trench-like hollow section of the second interlayer insulating film 26 surround the display-area-corresponding part, and the hollow section 49 provides the trench-like groove 49 on the surface of the active matrix substrate 3.

In a non-display area, no electrode is provided on the active matrix substrate (a voltage is not applied to the liquid crystal layer). Hence, the alignment is always in a splay alignment. However, by providing the step sections 57, the liquid crystal panel 10p can suppress spreading of the splay alignment from the non-display area to the display area (particularly spreading during white display). Hence, it is possible to improve display quality of the present liquid crystal panel.

In Figs. 31 and 32, edges of the pixel electrodes 17 positioned at ends of the display area and respective side walls of the hollow sections of the second interlayer insulating film 26 overlap (are in line with) each other. However, the arrangement is not limited to this. The side walls of the hollow section of the second interlayer insulating film 26 may be arranged so as to not overlap the edges of the pixel electrodes 17. Moreover, the trench-like hollow sections formed in the second interlayer insulating film 26 have a width of not less than 3 [µm], and is preferably not less than 5 [µm]. Moreover, in Figs. 31 and 32, a level difference in the step sections 57 is made to be 3 [µm] by hollowing the second interlayer insulating film 26, however it is not limited to this arrangement. The step sections 57 may be formed by partially reducing the thickness of the second interlayer insulating film 26 (preferably a thickness of not less than 1.5 [µm]).

In the active matrix substrate 3p, trench-like grooves which surround the display-area-corresponding part is formed on its surface, however the arrangement is not limited to this. For example, frame-like projections may be provided on a surface of the active matrix substrate so as to surround the display-area-corresponding part, and the step sections for suppressing the reverse transition (from a bend alignment to a splay alignment) may be provided by providing the projections. The projections may be constructed by, for example providing an insulating film provided above the TFTs to have projection parts thicker than adjacent parts to the projection parts.

The present liquid crystal panel may be arranged as in a liquid crystal panel 10q illustrated in Fig. 28. Fig. 30 is an enlarged plan view of a part circled by dotted lines in Fig. 28 (however, the liquid crystal layer and the color filter substrate have been omitted), and Fig. 33 is a cross sectional view taken on line q-q in Fig. 30.

As illustrated in Figs. 28 and 33, the liquid crystal panel 10q is an OCB mode liquid crystal panel including: an active matrix substrate 3; a color filter substrate 30q; and a liquid crystal layer 40 provided between the two substrates (3 and 30q). The color filter substrate 30q has, on a transparent substrate 32, a black matrix 13 made of a light shielding film, and color layers each of which has one of colors red (R), green (G), and blue (B). An insulating film 48 is provided so as to cover the black matrix 13 and the color layers 14. The insulating film 48 may be an insulating film (flattening film) provided for flattening a bulge generated at boundary sections between the black matrix 13 and respective color layers 14 (generated by having end sections of the black matrix 13 and the color layers 14 overlap each other). A counter electrode 28 is provided on the insulating film 48, and an alignment film 19 is provided so as to cover the insulating film 48.

A groove 65 (recess section) is provided trench-like so as to surround a display-area-corresponding part on a surface of the color filter substrate 30q. Step sections 75 for suppressing reverse transition (from a bend alignment to a splay alignment) are provided on a surface of the color filter substrate 30q such that the step sections 72 surround the display-area-corresponding part (see Figs. 28 and 30) by providing the groove 65. More specifically, as illustrated in Fig. 33, trench-like hollow sections of the insulating film 48 surround the display-area-corresponding part, and the grooves 65 are provided trench-like on the surface of the color filter substrate 30q by having the hollow sections of the insulating film 48. In Fig. 33, edges of the pixel electrodes 17 positioned at ends of the display area and respective side walls of the hollow sections of the second interlayer insulating film 26 overlap (be vertically in line with) each other. However, the arrangement is not limited to this. The side walls of the hollow section of the second interlayer insulating film 26 may also be arranged such that the side walls of the hollow section and the edges of the pixel electrodes 17 do not overlap each other.

In a non-display area, no electrode is provided on the active matrix substrate (no voltage is applied to the liquid crystal layer). Hence, the alignment in the non-display area is always in a splay alignment. However, by providing the step sections 75, the present liquid crystal panel 10q suppresses the splay alignment to spread (particularly spreading during white display) from the non-display area to a display area. As a result, it is possible to improve display quality of the present liquid crystal panel.

The color filter substrate 30q has trench-like grooves provided on its surface so as to surround the display-area-corresponding part, however the arrangement is not limited to this. For example, frame-like projections may be provided on the surface of the color filter substrate so as to surround the display-area-corresponding part, and step sections for suppressing reverse transition (from a bend alignment to a splay alignment) may be provided by providing the projections.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

A liquid crystal panel and a liquid crystal display apparatus of the present invention is suitable for, for example, a mobile liquid crystal display.

## Claims

1. A liquid crystal panel comprising:
an active matrix substrate on which (i) signal lines including scanning signal lines and data signal lines, (ii) transistors connected to respective signal lines, and (iii) pixel electrodes provided for respective pixel areas demarcated by the signal lines are provided;
a counter substrate; and
a liquid crystal layer provided between the active matrix substrate and the counter substrate, the liquid crystal layer being caused to transition from a splay alignment to a bend alignment,
at least one of the active matrix substrate and the counter substrate having a surface on which a step section for suppressing reverse transition from a bend alignment to a splay alignment is provided, the step section being provided so that (i) the step section, (ii) a corresponding gap between adjacent pixel electrodes and (iii) a corresponding one of the signal lines overlap each other.

2. The liquid crystal panel as set forth in claim 1, wherein:
a corresponding groove is provided on the surface such that the (i) the corresponding groove, (ii) the corresponding gap between adjacent pixel electrodes and (iii) the corresponding one of the signal lines overlap each other, and
said step section is provided by providing the groove.

3. The liquid crystal panel as set forth in claim 1, wherein:
a corresponding plurality of depressions is provided on the surface such that (i) the corresponding depressions, (ii) the corresponding gap between adjacent pixel electrodes and (iii) the corresponding one of the signal lines overlap each other, and
said step section is provided by providing the depressions.

4. The liquid crystal panel as set forth in claim 1, wherein
a corresponding pair of embankments that face each other is provided on the surface such that (i) the corresponding pair of embankments, (ii) the corresponding gap between adjacent pixel electrodes and (iii) the corresponding one of the signal lines overlap each other, and
said step section is provided by providing the corresponding pair of embankments.

5. The liquid crystal panel as set forth in claim 2, wherein the groove is provided by partially removing or partially reducing thickness of an insulating film of the active matrix substrate.

6. The liquid crystal panel as set forth in claim 3, wherein the plurality of depressions are provided by partially removing or partially reducing thickness of an insulating film of the active matrix substrate.

7. The liquid crystal panel as set forth in claim 5 or 6, wherein the insulating film is an interlayer insulating film provided above the transistors, the interlayer insulating film including organic material.

8. The liquid crystal panel as set forth in claim 4, wherein an insulating film is provided above the transistors, the insulating film being thicker in embankment parts than in adjacent parts to the embankment parts.

9. The liquid crystal panel as set forth in claim 2, wherein the groove is provided by partially removing or partially reducing thickness of an insulating film of the counter substrate.

10. The liquid crystal panel as set forth in claim 1, wherein each of the active matrix substrate and the counter substrate has a surface on which the step section is provided.

11. The liquid crystal panel as set forth in claim 1, further comprising retention capacitor wires which pass transversely through the respective pixel areas,
the pixel electrodes having openings in parts where the pixel electrodes and the retention capacitor wires overlap each other, the openings causing transition from a splay alignment to a bend alignment.

12. A liquid crystal display apparatus comprising a liquid crystal panel recited in claim 1.

13. A liquid crystal panel comprising:
an active matrix substrate on which (i) signal lines including scanning signal lines and data signal lines, (ii) transistors connected to the respective signal lines, and (iii) pixel electrodes provided for respective pixel areas demarcated by the signal lines are provided;
a counter substrate;
a liquid crystal layer provided between the active matrix substrate and the counter substrate, the liquid crystal layer being caused to transition from a splay alignment to a bend alignment; and
a spacer provided between the active matrix substrate and the counter substrate,
at least one of the active matrix substrate and the counter substrate having a surface on which a step section is provided for suppressing reverse transition from a bend alignment to a splay alignment, the step section being provided so as to surround the spacer.

14. The liquid crystal panel as set forth in claim 13, wherein the step section is provided by providing a recess section, the recess section being provided on the surface of at least one of the active matrix substrate and the counter substrate so as to surround the spacer.

15. The liquid crystal panel as set forth in claim 14, wherein the recess section is provided by partially removing or partially reducing thickness of an insulating film of the active matrix substrate.

16. The liquid crystal panel as set forth in claim 15, wherein the insulating film is an interlayer insulating film provided above the transistors, the interlayer insulating film including organic material.

17. The liquid crystal panel as set forth in claim 14, wherein the recess section is provided by partially removing or partially reducing thickness of an insulating film of the counter substrate.

18. The liquid crystal panel as set forth in claim 13, further comprising retention capacitor wires which pass transversely through the respective pixel areas,
the pixel electrodes having openings in parts where the pixel electrodes and the retention capacitor wires overlap each other, the openings causing transition from a splay alignment to a bend alignment.

19. A liquid crystal display apparatus comprising a liquid crystal panel recited in claim 13.

20. A liquid crystal panel comprising:
a display area;
a non-display area which adjoins the display area; and
a liquid crystal layer provided between an active matrix substrate and a counter substrate, the liquid crystal layer being caused to transition from a splay alignment to a bend alignment,
at least one of the active matrix substrate and the counter substrate having a surface on which a step section for suppressing reverse transition from a bend alignment to a splay alignment are provided, the step section being provided so as to surround a display area part.

21. The liquid crystal panel as set forth in claim 20, wherein the step section is provided by providing a recess section, the recess section being provided on the surface of at least one of the active matrix substrate and the counter substrate so as to surround the display area part.

22. The liquid crystal panel as set forth in claim 21, wherein the recess section is provided by partially removing or partially reducing thickness of an insulating film of the active matrix substrate.

23. The liquid crystal panel as set forth in claim 21, wherein the recess section is provided by partially removing or partially reducing thickness of an insulating film of the counter substrate.
